# EUROPÄISCHE PATENTSCHRIFT

(11) **EP 4 063 981 B1**
(45) Veröffentlichungstag und Bekanntmachung des Hinweises auf die Patenterteilung: **01.07.2026**
(21) Anmeldenummer: 21165239.1
(22) Anmeldetag: 26.03.2021
(51) Int. Cl.: G05B 23/02

(54) **VERFAHREN ZUM DURCHFÜHREN EINES AUTOMATISCHEN REPARATURPROZESSES AN ZUMINDEST EINER FUNKTIONSEINHEIT EINER BASISEINHEIT, SOWIE COMPUTERPROGRAMMPRODUKT UND REPARATURSYSTEM**
METHOD FOR PERFORMING AN AUTOMATIC REPAIR PROCESS ON AT LEAST ONE FUNCTIONAL UNIT OF A BASE UNIT AS WELL AS A COMPUTER PROGRAM PRODUCT AND REPAIR SYSTEM
PROCEDE D'EXECUTION D'UN PROCESSUS DE REPARATION AUTOMATIQUE SUR AU MOINS UNE UNITE FONCTIONNELLE D'UNE UNITE DE BASE, ET PRODUIT PROGRAMME INFORMATIQUE ET SYSTEME DE REPARATION

(43) Veröffentlichungstag der Anmeldung: 28.09.2022
(73) Patentinhaber: VOLKSWAGEN AG, 38440 Wolfsburg (DE)
(72) Erfinder: Aguirre Mehlhorn, Marcel, 38448 Wolfsburg (DE); Kain, Tobias, 3281 Oberndorf/Melk (AT); Wesche, Maximilian, 31234 Edemissen (DE); Decke, Hendrik, 38104 Braunschweig (DE); Müller, Julian-Steffen, 30161 Hannover (DE); Horeis, Timo, 21073 Hamburg (DE); Plinke, Fabian, 22297 Hamburg (DE)

(56) Entgegenhaltungen:
- CN-A- 108 563 536
- US-A1- 2014 074 343
- US-A1- 2017 161 182
- YANG JINGCHI ET AL: "A Framework for Design of Self-Repairing Digital Systems", 2019 IEEE INTERNATIONAL TEST CONFERENCE (ITC), IEEE, 9 November 2019 (2019-11-09), pages 1 - 10, XP033720235, DOI: 10.1109/ITC44170.2019.9000155

## Beschreibung

Die Erfindung betrifft ein Verfahren zum Durchführen eines automatischen Reparaturprozesses an zumindest einer Funktionseinheit einer Basiseinheit.

Des Weiteren betrifft die Erfindung ein Computerprogrammprodukt. Ebenfalls betrifft die Erfindung ein Reparatursystem zum Durchführen eines automatischen Reparaturprozesses an zumindest einer Funktionseinheit einer Basiseinheit.

Beispielsweise ist bei einem autonomen Fahren eines autonom betriebenen Fahrzeugs die Sicherheit der Fahrzeugpassagiere auf höchster Priorität gestellt. Daher werden die autonom betriebenen Fahrzeuge mit redundanten Hardwaresystemen ausgestattet, um bei einem potentiellen Ausfall einer Komponente die Sicherheit der Passagiere beziehungsweise Insassen bewahren zu können. Dabei kann beispielsweise in einen Fail-Safe-Zustand gewechselt werden. Bisher können fehlerhaft erkannte Hardwarekomponenten aus dem System ausgegliedert und bis zur nächsten Wartung beziehungsweise bis zum nächsten Service des autonom betriebenen Fahrzeugs außer Kraft beziehungsweise außer Betrieb gesetzt werden.

Dies gilt nicht nur für autonom betriebene Fahrzeuge, sondern gilt in automatisierten Systemen. Beispielsweise ist dies bei Fahrzeugen, insbesondere autonom betriebenen Fahrzeugen, oder bei anderweitigen Systemen, wie automatisierte Systeme, die gängige Methode, um fehlerhafte Komponenten reparieren oder austauschen zu können, bei einem Wartungsvorgang oder einem Servicevorgang. Dabei können defekte Komponenten bei einer Wartung repariert oder ausgetauscht werden. Ebenso können die Komponenten überwacht werden, sodass bei Feststellung eines bevorstehenden oder auftretenden Fehlers frühzeitig Wartungsarbeiten durchgeführt werden können. Dabei können über Fernwartungssysteme die einzelnen Komponenten überwacht werden. Dadurch kann beispielsweise eine effizientere Ausfallwartung durchgeführt werden. Insbesondere ergibt sich eine vorbeugende Maßnahme zur Durchführung einer geplanten Wartung. Somit können, insbesondere vorausschauende, Wartungen durchgeführt werden.

Beispielsweise offenbart die CN108563536A ein Verfahren und eine Vorrichtung zur Fehlerwiederherstellung und beziehen sich auf das technische Gebiet von Computern. Das Verfahren umfasst die Schritte des Beurteilens, ob ein Tonwiedergabefehlerfehlertyp Fehlertypen in einer Fehlertypsequenz ist oder nicht in Reihenfolge gemäß den Prioritäten der Fehlertypen in der voreingestellten Fehlertypsequenz ist.

Eine Aufgabe der vorliegenden Erfindung besteht darin, eine Funktionsfähigkeit von einer Komponente eines automatisierten Systems während eines Betriebs dieses automatisierten Systems zu verbessern.

Diese Aufgabe wird durch ein Verfahren, ein Computerprogrammprodukt und ein Reparatursystem gemäß den unabhängigen Ansprüchen gelöst. Sinnvolle Weiterbildungen ergeben sich aus den abhängigen Ansprüchen.

Die Erfindung wird definiert durch ein Verfahren nach den Merkmalen des Anspruchs 1.

Durch das vorgeschlagene Verfahren können automatisierte Systeme zuverlässiger betrieben werden. Dies kann dadurch erreicht werden, indem während des Betriebs des automatisierten

Systems fehlerhafte Komponenten oder Funktionseinheiten aktiv repariert werden können. Somit können bereits während des Betriebs des Systems oder der Basiseinheit aktive Reparaturmaßnahmen zur Behebung von Fehlern an den Komponenten oder Funktionseinheiten erfolgen. Insbesondere können ausgefallene Komponenten während eines Betriebs des Systems wieder instand gesetzt werden und während des laufenden Betriebs des Systems wieder als aktive Einheit dem System zur Verfügung gestellt werden. Insbesondere kann das vorgeschlagene Verfahren besonders vorteilhaft bei redundanten Systemen angewendet werden. Insbesondere weisen automatisierte, insbesondere autonome, Systeme redundante Hardwaresysteme oder Softwaresysteme auf. Folglich kann mit dem vorgeschlagenen Verfahren eine ausgefallene Komponente dieses redundanten Systems während des laufenden Betriebs des automatisierten Systems repariert beziehungsweise wieder aktiviert werden. Somit kann das automatisierte System oder ein autonomes System zuverlässiger, wartungsminimierter und ausfallsicherer betrieben werden. Insbesondere kann die ausgefallene Komponente in einen ursprünglichen Zustand zurückgesetzt werden.

Insbesondere kann das vorgeschlagene Verfahren besonders vorteilhaft bei einem autonom betriebenen Fahrzeug angewendet werden. Somit kann während der Fahrt des autonomen Fahrzeugs ein aktiver Reparaturvorgang von fehlerhaften beziehungsweise defekten Funktionseinheiten durchgeführt werden.

Mit anderen Worten kann mithilfe des vorgeschlagenen Verfahrens eine Hardware-Redundanz-Reaktivierung der zumindest einen Funktionseinheit während des laufenden Betriebs der Basiseinheit durchgeführt werden. Somit kann mithilfe des durchgeführten Reparaturzyklus oder Lösungsansatzes eine aktive Reparatur während eines laufenden Betriebs der Basiseinheit erfolgen. Durch das vorgeschlagene Verfahren kann verhindert werden, dass ausgegliederte beziehungsweise ausgefallene Hardwarekomponenten nicht mehr bis zum nächsten Wartungsprozess oder einen manuellen Reparaturprozess zur Verfügung stehen. Des Weiteren kann durch die Reaktivierung der zumindest einen Funktionseinheit eine Redundanz der Basiseinheit wieder hergestellt und kontinuierlich sichergestellt werden. Die vorhin geschilderten Wartungsmöglichkeiten erhöhen nicht die Sicherheit der Basiseinheit oder eines automatisierten Systems, sondern liefern nur Optimierungen für die nachfolgenden Wartungsbeziehungsweise Reparaturarbeiten in einer Werkstatt. Somit kann durch das vorgeschlagene Verfahren eine aktive Sicherheit während des Betriebs der Basiseinheit erhöht werden. Durch die Durchführung des automatischen Reparaturprozesses an der zumindest einen Funktionseinheit der Basiseinheit können Wartungsarbeiten und/oder Reparaturarbeiten und/oder Serviceprozesse an der Basiseinheit minimiert beziehungsweise reduziert werden. Somit kann die Basiseinheit effizienter und langlebiger betrieben werden.

Insbesondere handelt es sich bei dem vorgeschlagenen Verfahren um ein computerimplementiertes Verfahren.

Bei der Basiseinheit kann es sich beispielsweise um ein automatisiertes System oder um ein autonomes System handeln. Dabei kann die zumindest eine Funktionseinheit eine Komponente der Basiseinheit sein.

Beispielsweise kann das vorgeschlagene Verfahren mit einem HRR-System ("Hardware Redundancy Recovery System) durchgeführt werden.

Während des Betriebs der Basiseinheit kann mithilfe der Detektionseinheit eine kontinuierliche Überwachung der zumindest einen Funktionseinheit erfolgen. Folglich kann durch die kontinuierliche Überwachung eine effiziente Detektion eines auftretenden fehlerhaften Zustands der zumindest einen Funktionseinheit detektiert werden.

Bei der Detektionseinheit kann es sich beispielsweise um eine Überwachungseinheit oder um ein Erfassungssystem handeln. Die Detektionseinheit kann beispielsweise als eigenständige Einheit in der Basiseinheit integriert werden. Ebenfalls kann die Detektionseinheit bereits Bestandteil der Basiseinheit sein.

Bei dem fehlerhaften Zustand der zumindest einen Funktionseinheit handelt es sich insbesondere um einen Fehlerfall oder um einen Fehler oder um einen Defekt. Um den Reparaturprozess der zumindest einen Funktionseinheit im Falle eines Fehlers der zumindest einen Funktionseinheit einleiten und durchführen zu können, kann der Typ oder eine Art der zumindest einen Funktionseinheit bestimmt beziehungsweise bereitgestellt werden. Dies ist dadurch vorteilhaft, da jeder Typ beziehungsweise jede Art an Funktionseinheiten verschiedene Fehlerzustände oder Fehlerarten aufweisen kann. Mithilfe des Typs der zumindest einen Funktionseinheit kann eine effizientere Reparatur der zumindest einen Funktionseinheit durchgeführt werden. Beispielsweise können mit dem Typ der zumindest einen Funktionseinheit ein Charakteristikum, ein Modelltyp, ein Datenblatt, Funktionsplan oder anderweitige Informationen bezüglich der Funktionalität und/oder Komponentenzusammenstellung der zumindest einen Funktionseinheit bereitgestellt werden. Dies kann entweder mit der elektronischen Auswerteeinheit oder einer elektronischen Datenverarbeitungseinheit erfolgen.

Ebenfalls können beispielsweise in einer Datenbank zu jeder Funktionseinheit der Basiseinheit der jeweilige Typ und/oder anderweitige Funktionseinheiten spezifische Informationen hinterlegt werden. Somit können diese Informationen schneller bereitgestellt werden.

Eine weitere Möglichkeit zur Detektion des fehlerhaften Zustands der zumindest einen Funktionseinheit ist die Verwendung eines FDIRO-Systems ("Fault-Detection-Isolation-Recovery-Optimization-System"). Dieses System dient insbesondere dazu, auftretende Fehler von Komponenten von automatisierten oder autonomen Systemen zu verwalten.

Mithilfe des FDIRO-Systems kann ein fehlerhafter Zustand einer Funktionseinheit festgestellt werden. Dabei kann es sich bei der Funktionseinheit um eine Hardwareapplikation oder um eine Softwareapplikation handeln. Insbesondere kommt das FDIRO-System in autonom betriebenen Fahrzeugen zum Einsatz. Ebenso kann es in jeglichen automatisierten Systemen eingesetzt werden. Nach der Detektion der fehlerhaften Funktionseinheit kann diese fehlerhafte Funktionseinheit vorübergehend deaktiviert und somit außer Betrieb gesetzt werden. Somit stellt diese fehlerhafte Funktionseinheit keine Gefahr für die Basiseinheit als automatisiertes System mehr dar. Dabei kann zusätzlich unterschieden werden, ob es sich um einen hardwaremäßigen Fehler oder um einen softwaremäßigen Fehler handelt. Somit kann hier noch eine Teilklassifizierung des Fehlers der Funktionseinheit durchgeführt werden. Nachdem die defekte Funktionseinheit isoliert wurde, kann das FDIRO-System überprüfen, ob eine weitere Funktionseinheit Ersatz zu der isolierten Funktionseinheit aktivieren kann. Insbesondere bezieht sich diese Ersatz-Funktionseinheit zum Durchführen der Softwareprozesse der isolierten Funktionseinheit. Wenn keine alternative Funktionseinheit gefunden wurde oder vorhanden ist, so können weitere Sicherheitsmechanismen der Basiseinheit oder des automatisierten Systems eingeleitet werden. Im Beispiel eines autonom fahrenden Fahrzeugs wäre bei keiner Auffindung einer alternativen Funktionseinheit das Einleiten eines Nothaltevorgangs des autonom betriebenen Fahrzeuges, um die Passagiere des autonom fahrenden Fahrzeuges vor Gefahren schützen zu können. Beispielsweise können nach der erfolgreichen Suche nach einer alternativen Funktionseinheit weitere Systeme der Basiseinheit untersucht werden, welche ausreichende Rechenkapazitäten aufweisen, um die Softwareprozesse der ausgefallenen Funktionseinheiten auffangen oder zumindest einen Teil davon zu übernehmen. Somit können die Funktionen der ausgefallenen Funktionseinheit auf mehrere Systeme aufgeteilt werden.

Infolgedessen kann ein solch beschriebenes FDIRO-System als zusätzliches vorteilhaftes System in der Basiseinheit integriert sein, sodass bereits mittels dieses FDIRO-Systems der fehlerhafte Zustand der zumindest einen Funktionseinheit detektiert werden kann.

Die, unabhängig mit welcher Methode detektierte, fehlerhafte Funktionseinheit kann mithilfe der zugeordneten beziehungsweise festgelegten Fehlerfall-Typ-Klasse repariert beziehungsweise wieder instand gesetzt werden. Mithilfe der Fehlerfall-Typ-Klasse werden zu jedem Typ einer Funktionseinheit charakteristische Fehlerzustände und/oder Fehlerfälle und/oder Fehlerarten zugeordnet. Jede dieser Fehlerfall-Typ-Klasse weist die zumindest zwei verschiedenen Fehlerzustände, insbesondere eine Vielzahl von verschiedenen Fehlerzuständen, auf. Diese werden in ihrer Gewichtung priorisiert, sodass die fehlertechnisch schwerwiegendsten Fehler der höchsten Priorität zugeordnet werden können. Jeder dieser Fehlerzustände weist einen eigenen, individuellen Reparaturzyklus oder Reparaturablauf oder Reparaturverfahren auf. Mithilfe dieses Reparaturzyklus können bereits sich bewährte Reparaturmaßnahmen beziehungsweise Reparaturschritte zum Instandsetzen der zumindest einen Funktionseinheit vorgegeben werden.

Insbesondere handelt es sich bei dem Reparaturzyklus um vorgegebene Reparaturmaßnahmen, welche anhand von vielfältigst durchgeführten verschiedenen Reparaturmaßnahmen in der Vergangenheit festgelegt wurden. Mit anderen Worten kann mithilfe des individuellen Reparaturzyklus eine effiziente Reparatur der zumindest einen Funktionseinheit bezüglich des jeweiligen Fehlerzustandes durchgeführt werden. Insbesondere können durch die bereits vorgegebenen Reparaturzyklen und/oder Fehlerzustände eine effizientere und insbesondere schnellere Reparatur der zumindest einen Funktionseinheit erreicht werden. Insbesondere erfolgt ein automatisches Auswählen des Fehlerzustands mit der höchsten Priorität. Dies kann beispielsweise mit einer Steuereinheit erfolgen. Nachdem der dem ausgewählten Fehlerzustand zugeordnete Reparaturzyklus erfolgreich durchgeführt wurde, kann zunächst der aktuelle Reparaturzustand der zumindest einen Funktionseinheit festgestellt beziehungsweise beurteilt werden. Somit kann hier zunächst überprüft werden, ob der durchgeführte Reparaturzyklus erfolgreich war und der fehlerhafte Zustand der zumindest einen Funktionseinheit behoben werden konnte. Somit kann eine aktive und automatisierte Reparatur der zumindest einen Funktionseinheit während des Betriebs der Basiseinheit durchgeführt werden.

Erfindungsgemäß ist vorgesehen, dass einzelne Fehlerzustände der zumindest einen Funktionseinheit hinsichtlich einer Kompatibilität ihrer Reparaturzyklen zueinander klassifiziert werden, wobei jeweils kompatible Fehlerzustände zu einer Kompatibilitätsklasse zugeordnet werden. Durch die Zuordnung der kompatiblen Fehlerzustände zu einer selben Kompatibilitätsklasse kann der automatische Reparaturprozess der zumindest einen Funktionseinheit effizienter und insbesondere schneller durchgeführt werden. Dies kann dadurch erfolgen, da beispielsweise zueinander kompatible Fehlerzustände gleichzeitig oder synchron ausgewählt und durchgeführt werden können. Infolgedessen können beispielsweise mehrere Reparaturzyklen, welche durch die Kompatibilität der Fehlerzustände zugeordnet sind, ausgeführt werden. Somit können mehrere Reparaturzyklen gleichzeitig, insbesondere synchron, ausgeführt werden. Somit können zeitgleich verschiedene Reparaturmaßnahmen an der zumindest einen Funktionseinheit durchgeführt werden. Beispielsweise können gleichzeitig hardwarebasierte Reparaturmaßnahmen und softwarebasierte Reparaturmaßnahmen ausgeführt werden. Somit kann der Reparaturprozess der zumindest einen Funktionseinheit schneller und effizienter durchgeführt werden.

In einem Ausführungsbeispiel der Erfindung ist vorgesehen, dass ein vorgegebener Referenzzustand der zumindest einen Funktionseinheit, in welchem die zumindest eine Funktionseinheit keinen fehlerhaften Zustand aufweist, bei der Beurteilung des aktuellen Reparaturzustands der zumindest einen Funktionseinheit berücksichtigt wird. Beispielsweise kann der vorgegebene Referenzzustand in einer Datenbank oder in einer digitalen Speichereinheit, insbesondere eines Reparatursystems, gespeichert sein. Somit kann nach der Durchführung des Reparaturzyklus der aktuelle Reparaturzustand mit dem Referenzzustand verglichen werden. Somit kann systemseitig festgestellt werden, ob der durchgeführte Reparaturzyklus erfolgreich war. Der Referenzzustand spiegelt insbesondere einen fehlerfreien Zustand der Funktionseinheit wider. Mit anderen Worten ist die Funktionseinheit in dem Referenzzustand vollständig funktionsfähig. Beispielsweise kann der Referenzzustand verschiedene Parameter und/oder Daten und/oder Informationen bezüglich eines fehlerfreien Zustandes der Funktionseinheit charakterisieren. Somit kann der aktuelle Reparaturzustand, in welchem sich die Funktionseinheit aktuell befindet, mit diesen Informationen bezüglich des Referenzzustandes verglichen und überprüft werden. Wenn optional der Referenzzustand und der Reparaturzustand gleich sind, insbesondere identische Parameter aufweisen, dann kann als Beurteilungsergebnis festgelegt werden, dass der Reparaturzyklus erfolgreich war und die zumindest eine Funktionseinheit erfolgreich repariert wurde. Folglich kann die zumindest eine Funktionseinheit wieder vollständig der Basiseinheit zur Verfügung gestellt werden. Somit kann die Funktionseinheit wieder vollumfänglich in der Basiseinheit genutzt werden.

Beispielsweise können mehrere vergangene Zustände der Funktionseinheit mit dem Referenzzustand charakterisiert werden. Insbesondere kann der Referenzzustand eine Vielzahl von verschiedensten Informationen und/oder Daten bezüglich der Funktionseinheit aufweisen. Beispielsweise kann es sich bei dem Referenzzustand um eine Werkseinstellung der Funktionseinheit handeln. Beispielsweise kann der Referenzzustand als Standardbetriebsmodus der Funktionseinheit verstanden werden.

In einem weiteren Ausführungsbeispiel ist vorgesehen, dass der aktuelle Reparaturzustand der zumindest einen Funktionseinheit dahingehend beurteilt wird, ob die zumindest eine Funktionseinheit weiterhin den fehlerhaften Zustand aufweist. Beispielsweise kann dies mithilfe des Reparatursystems oder mit dem HRR-System erfolgen. Nach Durchführung des Reparaturzyklus, insbesondere nach jedem durchgeführten Reparaturzyklus der verschiedenen Fehlerzustände, wird unmittelbar danach überprüft, ob die Funktionseinheit erfolgreich repariert werden konnte oder nicht. Somit können bei einem bestehenden Fehler trotz eines durchgeführten Reparaturzyklus unverzüglich weitere Reparaturmaßnahmen oder Reparaturzyklen eingeleitet und durchgeführt werden. Somit kann eine kontinuierliche Überwachung beziehungsweise ein kontinuierlicher Reparaturprozess der zumindest einen Funktionseinheit bereitgestellt werden.

In einem weiteren Ausführungsbeispiel der Erfindung ist vorgesehen, dass dann, wenn die zumindest eine Funktionseinheit weiterhin den fehlerhaften Zustand aufweist, zusätzlich ein Reparaturzyklus eines zweiten Fehlerzustands der Fehler-Typ-Klasse durchgeführt wird, welcher im Vergleich zum ersten Fehlerzustand eine niedrigere Priorität aufweist, wobei nach Abschluss des durchgeführten Reparaturzyklus des zweiten Fehlerzustands der aktuelle Reparaturzustand der zumindest einen Funktionseinheit beurteilt wird. Dadurch kann ein fortlaufender Reparaturprozess, insbesondere eine kontinuierliche Fehlerbehebung, der zumindest einen Funktionseinheit erreicht werden. Insbesondere werden die Reparaturzyklen so lange durchgeführt, bis die zumindest eine Funktionseinheit wieder voll funktionsfähig hergestellt werden konnte.

Insbesondere wird zunächst immer der Fehlerzustand der Fehler-Typ-Klasse ausgeführt, welcher die höchste Priorität im Vergleich zu den anderen aufweist. Somit kann ein kontinuierlicher Prozess beziehungsweise eine kontinuierliche Abfolge der möglichen fehlerhaften Zustände durchgeführt werden. Insbesondere wird jeder durchgeführte Reparaturzyklus nicht nochmals durchgeführt. Somit können in einem Fall alle Fehlerzustände entsprechend ihrer Priorisierung in der Priorisierungsreihenfolge nacheinander ausgeführt werden. Dadurch erfolgt eine automatische zyklische Abfolge der verschiedensten Reparaturzyklen. Nach jedem durchgeführten Reparaturzyklus wird zunächst überprüft, ob der fehlerhafte Zustand der zumindest einen Funktionseinheit erfolgreich repariert beziehungsweise beseitigt werden konnte. Falls dies nicht der Fall ist, wird unmittelbar der mit der nachfolgend höchsten Priorität, welcher noch nicht durchgeführt wurde, ausgewählt und durchgeführt. Somit kann eine automatisierte und zyklische Reparatur der zumindest einen Funktionseinheit durchgeführt werden.

Für den Fall, dass alle zur Verfügung stehenden Fehlerzustände und die darin enthaltenen Reparaturzyklen ausgeführt wurden und trotzdem die Funktionseinheit nicht repariert werden konnte, so können diese Informationen für einen nachfolgenden manuellen Reparaturprozess in der Wartung oder in der Werkstatt genutzt werden, sodass diese Reparaturmaßnahmen effizienter und beschleunigter durchgeführt werden können, da durch die Ausführung der einzelnen Fehlerzustände diese ausgeschlossen werden konnten. Insbesondere kann dieser neu auftretende Fehlerzustand, welcher mit den vorhandenen Fehlerzuständen nicht behoben werden konnte, als neuer Fehlerzustand in der Fehlerfall-Typ-Klasse hinterlegt werden. Somit kann diese Fehlerfall-Typ-Klasse aktualisiert werden.

Erfindungsgemäß handelt es sich bei der Fehlerfall-Typ-Klasse um eine Klassifizierungsdatenbank bezüglich der möglichen Fehlerzustände des jeweiligen Typs der Funktionseinheit. In einem weiteren Ausführungsbeispiel der Erfindung ist vorgesehen, dass dann, wenn der Typ der Funktionseinheit keiner Fehlerfall-Typ-Klasse zugeordnet werden kann, in diesem Fall eine Default-Fehlerfall-Typ-Klasse dem Typ der Funktionseinheit zugeordnet wird, wobei in Abhängigkeit von der Default-Fehlerfall-Typ-Klasse eine vorgegebene Anzahl von verschiedenen Reparaturzyklen an der zumindest einen Funktionseinheit durchgeführt wird. Mit anderen Worten kann trotz des nicht identifizierten Typs der Funktionseinheit ein automatischer Reparaturprozess der zumindest einen Funktionseinheit durchgeführt werden. Dabei können in der Default-Fehlerfall-Typ-Klasse allgemeingültige Reparaturzyklen vorgegeben werden, welche in der Vergangenheit für solche nicht identifizierte Funktionseinheiten erfolgreich durchgeführt werden konnten. Anderenfalls können mit der Default-Fehlerfall-Typ-Klasse alle möglichen Fehlerzustände und Reparaturzyklen ausgeführt werden. Optional können alle Fehlerzustände in der Default-Fehlerfall-Typ-Klasse einer priorisierten Hierarchie unterliegen. Dadurch kann beispielsweise erreicht werden, dass durch die Vielzahl an möglichen Reparaturzyklen der fehlerhafte Zustand der Funktionseinheit behoben werden kann. Insbesondere kann beispielsweise mit der Default-Fehlerfall-Typ-Klasse festgelegt werden, dass alle möglichen Fehlerzustände in den Reparaturzyklen, die zu der Funktionseinheit passen könnten, durchgeführt werden. Somit kann trotz der Nichtidentifizierung des Typs der Funktionseinheit ein Reparaturprozess dieser Funktionseinheit durchgeführt werden.

Insbesondere können nach einer erfolgreichen Reparatur der Funktionseinheiten anhand der Default-Fehler-Typ-Klasse eine neue Fehlerfall-Typ-Klasse für diesen unbekannten Typ definiert werden, sodass diese für spätere fehlerhafte Funktionseinheiten herangezogen werden können.

In einem Ausführungsbeispiel der Erfindung ist des Weiteren vorgesehen, dass jedem individuellen Reparaturzyklus eine vorgegebene Anzahl an verschiedenen softwarebasierten Reparaturmaßnahmen und/oder hardwarebasierten Reparaturmaßnahmen zum Reparieren der zumindest einen Funktionseinheit zugeordnet werden. Beispielsweise erfolgt diese Zuordnung automatisch bei einem Initialisierungsvorgang der Basiseinheit, der Funktionseinheit oder des Reparatursystems. Insbesondere sind die verschiedenen Reparaturmaßnahmen anhand Datensätze festgelegt und dem jeweiligen Reparaturzyklus zugeordnet. Beispielsweise werden die Anzahl und/oder die Art der Reparaturmaßnahmen entsprechend der Art oder dem Typ der Funktionseinheit dem Reparaturzyklus des Fehlerzustands zugeordnet. Mithilfe der Reparaturmaßnahmen können entweder Reparaturmaßnahmen an der Hardware und/oder an der Software der Funktionseinheit durchgeführt werden.

Im Nachfolgenden wird dieses Ausführungsbeispiel anschaulich dargestellt. Dazu handelt es sich beispielsweise bei der Basiseinheit um ein Fahrzeug und bei der Funktionseinheit um einen Ultraschallsensor des Fahrzeuges. Insbesondere ist ein exemplarischer Reparaturzyklus zum Reparieren des Ultraschallsensors in der nachfolgenden Tabelle 1 dargestellt.

| Nr. | Geschätzter Gesamtaufwand [1,10] | Geschätzter Rechenaufwand/ Durchführunqszeit | Lösungsansatz | Beschreibung | |
|---|---|---|---|---|---|
| a | 1-2 | sehr geringer Rechenaufwand, jedoch wegen dem Abwarten des Intervalls hohe Durchführungszeit | Grenzwertbetrachtung inkl. Umwelteinflüsse | Überprüfung, ob sich der Messwert in den Grenzbereichen des Sensors befindet (inkl. Messfehlerabschätzung aufgrund von Umwelteinflüssen). Durch Temperaturmessung und Feuchtigkeitsmessung können neue Messbereiche und Grenzen berechnet werden. Zudem lassen sich Mikrofone auf gewisse Frequenzen ausrichten, die mit Ultraschall interferieren und letztere als Fehlerquelle eingestuft werden. | |
| b | 2 | geringer Rechenaufwand und Durchführungszeit, da jeder Sensor den Datenfluss konstant liefern muss | Redundante Ausführung von Ultraschallsensoren | In einem Fahrzeug sind für eine umfassende Abdeckung z.B. 12-16 Ultraschallsensoren verbaut. Diese besitzen in sich übergehende Arbeitsbereiche, welche als Validierung der Fehlermeldung genutzt werden können. | |
| c | | geringer Rechenaufwand und Durchführungszeit, da jeder Sensor den Datenfluss konstant liefern muss | Redundanter Test mit anderen Sensoren | Melden anderer Sensoren, wie das LiDAR-System oder das Kamera-System ähnliche oder gleiche Daten, lässt sich die Glaubwürdigkeit des Ereignisses erhöhen oder im umgekehrten Fall verringern. Auch wenn RADAR-Sensoren eher für mittlere und weite Distanzen gedacht sind, können die Dateninformationen von kurzen Distanzen mit geringer Priorität in die Bewertung mit einfließen. | |
| d | 4 | geringer Rechenaufwand aber lange Durchführungszeit | Sensorheizung | Feuchtigkeit und Frost kann durch eine integrierte Heizung am Sensor entfernt werden. | |
| e | 6 | geringer Rechenaufwand, jedoch hohe Durchführungszeit. Zusätzlich ist während der Säuberung der Sensor nicht Sensor nutzbar | Säuberungsmechanik des Ultraschallsensors aktivieren und überprüfen, ob Fehler noch vorhanden ist | | 1. Wischwasserstrahl ähnlich wie bei der Scheinwerferreinigung |
| | | | | | 2. mechanischer Abwischmechanismus |
| f | 6 | geringer Rechenaufwand, jedoch hohe Durchführungszeit. Zusätzlich ist während der Neuinitialisierung ist der Sensor nicht nutzbar | Neuinitialisierung | Der einzelne Ultraschallsensor kann vom zugehörigem Rechner/ Steuergerät neugestartet beziehungsweise neu initialisiert werden. Der Rechner selbst kann ebenfalls während der Fahrt neugestartet werden, wenn eine redundante Ausführung vorhanden ist. Ansonsten muss das Fahrzeug sich in einem sicheren Zustand begeben, sodass einem Systemneustart keine sicherheitskritischen Risiken für die Insassen darstellen. | |
| g | 2 | geringer Rechenaufwand und Durchführungszeit | Messung des Datenpaketstroms | Weicht der Datenpaketstrom des Ultraschallsensors von einem vordefinierten Normalwert ab, so kann auf eine falsche Initialisierung, einer Bandbreitenüberlastung oder einem Defekt eines Bauteils geschlossen werden. | |
| h | 2 | geringer Rechenaufwand und Durchführungszeit | Durchgangsprüfung | Durch eine Durchgangsprüfung oder einer Widerstandsmessung ließen sich Kabelbrüche erkennen (Multimeter). Durch das senden eines Testdatenpakets das einmal alle Sensoren umrundet (Tokenprinzip) kann jeder Sensor die Ankunft des Testdatenpakets melden und bei Nichtmeldung den Fehler genauer lokalisieren. | |

In diesem Beispiel ist in der Tabelle 1 zu sehen, dass dieser Reparaturzyklus die Reparaturmaßnahmen a bis h aufweist. Zu jedem von dieser Reparaturmaßnahme sind beispielsweise ein Lösungsansatz und eine dazu zugehörige Beschreibung angegeben. Somit ist zu jeder Reparaturmaßnahme ein genauer Lösungsansatz beziehungsweise Reparaturmaßnahme spezifiziert. Bei diesem Beispiel werden alle diese Reparaturmaßnahmen a bis h durchgeführt. Sobald diese Reparaturmaßnahmen durchgeführt wurden, kann dieser Reparaturzyklus als abgeschlossen angesehen werden. Mit anderen Worten werden alle die in der Tabelle 1 gezeigten Reparaturmaßnahmen durchgeführt.

Des Weiteren können den jeweiligen Reparaturmaßnahmen a bis h ein geschätzter Gesamtaufwand und ein geschätzter Rechenaufwand beziehungsweise Durchführungszeit zugeordnet werden. Somit kann systemseitig festgestellt werden, wie lange die Durchführung des Reparaturzyklus in Anspruch nimmt. Der geschätzte Gesamtaufwand ist in Kategorien [1 bis 10] eingeteilt. Jeder dieser Kategorien [1 bis 10] kann eine Zeitdauer zugeordnet werden. Diese Zuordnung ist in der nachfolgenden Tabelle 2 zu sehen.

| Geschätzter Gesamtaufwand [1 bis 10] | Zeiteinteilung |
|---|---|
| 1 | < 1 ms |
| 2 | < 10 ms |
| 3 | < 100 ms |
| 4 | < 500 ms |
| 5 | < 1 s |
| 6 | < 5 s |
| 7 | < 10 s |
| 8 | < 1 min |
| 9 | < 5 min |
| 10 | > 5 min |

In einem weiteren Ausführungsbeispiel ist vorgesehen, dass jedem der zumindest zwei Fehlerzustände eine individuelle Priorisierungsnummer zugeordnet wird, wobei in Abhängigkeit von der jeweiligen Priorisierungsnummer die Priorität jedes Fehlerzustandes definiert wird. Mit anderen Worten, jeder Fehlerzustand kann mit einer eigenen Priorisierungsnummer und somit mit einer eigenen Priorität festgelegt werden. Anhand dieser Priorisierungsnummer erfolgt das Auswählen des jeweiligen Fehlerzustands für die Durchführung eines Reparaturzyklus. Die Priorisierungsnummer kann anhand vorgegebener Kriterien und/oder Parameter definiert werden. Beispielsweise kann dies mit einer elektronischen Recheneinheit beziehungsweise elektronischen Datenverarbeitungseinheit durchgeführt werden. Insbesondere können den Fehlerzuständen eine statische Priorisierungsnummer zugeordnet werden oder die Priorisierungsnummer beziehungsweise die Priorität der Fehlerzustände kann dynamisch verändert und somit angepasst werden.

Gegebenenfalls kann die statische Zuteilung der Fehlerzustände von Fachexperten oder einem zuständigen Gremium festgelegt werden. Die dynamische Änderung der Priorisierung kann entweder manuell durch ein Over-the-Air-Update durch eine Bedienperson oder durch die elektronische Recheneinheit, insbesondere eines neuronalen Netzes, erfolgen

Für die Priorisierung und insbesondere die Zuordnung der Priorisierungsnummer können die verschiedensten Daten, Informationen oder Parameter berücksichtigt werden. Beispielsweise kann die Priorisierung anhand der jeweiligen Art des Fehlerzustands oder der Art der zugehörigen Funktionseinheit angepasst werden. Zur Veranschaulichung wird hier ebenfalls das Beispiel des Ultraschallsensors herangezogen.

Dazu ist in der nachfolgenden Tabelle 3 die Fehlerfall-Typ-Klasse eines Ultraschallsensors als Funktionseinheit dargestellt.

| Nr. | B | A | E | RPZ | Beschreibung |
|---|---|---|---|---|---|
| 1 | 6 | 6 | 3 | 108 | Schmutzanlagerung versperrt die Sensor (Wasserfilm und Frost ebenfalls denkbar) |
| 2 | 5 | 2 | 6 | 60 | Beschädigung der Oberfläche (Lack) (z.B. Steinschlag) |
| 3 | 5 | 7 | 2 | 70 | Witterungsbedingte Messfehler (Lufttemperatur, -feuchte, -druck, -strömung, -nebel) |
| 4 | 4 | 3 | 2 | 24 | Interferenzen und Störungen durch andere Geräuschquellen (z.B. Metallreibungen (Schienenfahrzeuge oder Pressluft) |
| 5 | 10 | 2 | 2 | 40 | Defektes Bauteil (z.B.: Überhitzung, mechanische Kräfte, Spannungsspitze, Alterung) |
| 6 | 8 | 2 | 3 | 48 | Fehlerhafte Initialisierung des Ultraschallsensors |
| 7 | 6 | 2 | 2 | 24 | Datenstrom von dem Ultraschallsensor hängt/ bricht ab |
| 8 | 6 | 2 | 3 | 36 | Bandbreitenüberlastung |
| 9 | 5 | 2 | 6 | 60 | EMV Störungen |
| 10 | 10 | 1 | 2 | 20 | Kabelbruch |

In dieser beispielhaften Tabelle 3 ist zu sehen, dass dieser speziellen Fehlerfall-Typ-Klasse zehn verschiedene Fehlerzustände 1 bis 10 zugeordnet sind.

Besonders vorteilhaft ist die Erfindung, dass die Priorisierungsnummer jedes Fehlerzustands in Abhängigkeit von einer Entdeckungswahrscheinlichkeitsinformation und/oder einer Fehlerfolgeinformation und/oder einer Auftretenswahrscheinlichkeitsinformation mit einer elektronischen Recheneinheit generiert wird, insbesondere die Entdeckungswahrscheinlichkeitsinformation und/oder die Fehlerfolgeinformation und/oder die Auftretenswahrscheinlichkeitsinformation in Abhängigkeit von der Beurteilung des aktuellen Reparaturzustands der zumindest einen Funktionseinheit dynamisch angepasst wird, insbesondere die elektronische Recheneinheit anhand des beurteilen aktuellen Reparaturzustands für das Generieren der Priorisierungsnummer maschinell trainiert wird.

In Bezug zu der Tabelle 3 ist in der Spalte B die Bedeutung der Fehlerfolge des jeweiligen Fehlerzustands charakterisiert. In der Spalte A wird die Auftretenswahrscheinlichkeitsinformation angegeben. In der Spalte E kann die Entdeckungswahrscheinlichkeitsinformation angegeben werden. Somit kann die Priorisierungsnummer anhand dreier verschiedener Parameter ermittelt beziehungsweise generiert werden. Je höher der Zahlenwert der Spalten B, A, E ist, desto bedeutender ist diese Information für die Generierung der Priorisierungsnummer. Die Priorisierungsnummer ist in der Spalte RPZ (Risiko-Prioritäts-Zahl) angegeben. Die Priorisierungsnummer entsteht durch Multiplikation der Spalten B, A und E. In dieser beispielhaften Tabelle 3 weist der Fehlerzustand Nummer 1 die höchste Priorität auf und der nachfolgend nächst höherem Fehlerzustand ist der Fehlerzustand Nummer 3. Des Weiteren findet sich in der Tabelle 3 zu jedem Fehlerzustand 1 bis 10 eine entsprechende Beschreibung beziehungsweise eine Definition des jeweiligen Fehlerzustands.

Da sich nach jeder durchgeführten Reparatur beziehungsweise nach jedem durchgeführten Reparaturprozess Änderungen in der Funktionseinheit ergeben können oder sich Änderungen in der Basiseinheit, können die Entdeckungswahrscheinlichkeitsinformation und/oder die Fehlerfolgeinformation und/oder die Auftretenswahrscheinlichkeitsinformation dynamisch angepasst beziehungsweise verändert werden. Somit kann beispielsweise die Tabelle 3 ständig aktualisiert werden, sodass der jeweilige automatische Reparaturprozess der Funktionseinheit effizient und erfolgsversprechend durchgeführt werden kann.

Um die Priorisierung der Fehlerzustände effizienter zu gestalten, kann die elektronische Recheneinheit, insbesondere des Reparatursystems, anhand jedes beurteilten aktuellen Reparaturzustands und/oder des jeweiligen Fehlerzustands und/oder der verschiedensten weiteren Informationen maschinell trainiert werden. Somit kann ein fortlaufender automatischer Reparaturprozess intelligent verbessert werden, da durch Anlernprozesse eine Effizienzsteigerung erreicht werden kann. Beispielsweise kann dies über eine Maschinenlerneinheit oder mittels eines Deep-Learning-Algorithmus erfolgen.

Es ist vorgesehen, dass zusätzlich zu dem ausgewählten ersten Fehlerzustand weitere Fehlerzustände, welche die gleiche Kompatibilitätsklasse wie der erste Fehlerzustand aufweisen, ausgewählt werden, wobei Reparaturzyklen dieser weiteren Fehlerzustände zumindest zeitweise gleichzeitig zum Reparaturzyklus des ersten Fehlerzustands an der zumindest einen Funktionseinheit ausgeführt, insbesondere gleichzeitig gestartet, werden. Mit anderen Worten können mehrere kompatible Rechenzyklen parallel an der zumindest einen Funktionseinheit ausgeführt werden. Insbesondere erfolgt das Starten beziehungsweise das Durchführen der kompatiblen Reparaturzyklen zu einem gleichen beziehungsweise identischen Startzeitpunkt. Somit laufen die einzelnen Reparaturzyklen parallel ab, sodass die Reparatur der zumindest einen Funktionseinheit rasch und effizient durchgeführt werden kann. Dabei werden die Reparaturzyklen derart ausgewählt und durchgeführt, dass die Reparaturzyklen sich nicht gegenseitig beeinträchtigen oder stören. Beispielsweise kann somit jeder der parallel durchgeführten Reparaturzyklen einen spezifischen Fehler beziehungsweise eine spezifische Fehlerursache an der Funktionseinheit reparieren.

Es ist vorgesehen, dass die Reparaturzyklen der weiteren Fehlerzustände und der Reparaturzyklus des ersten Fehlerzustands jeweils innerhalb einer vorgegebenen Zeitdauer ausgeführt werden, wobei unmittelbar nach dem Ende des durchgeführten Reparaturzyklus, welcher im Vergleich zu den anderen Reparaturzyklen der Kompatibilitätsklasse die längste Zeitdauer zur Ausführung benötigt, der aktuelle Reparaturzustand der zumindest einen Funktionseinheit beurteilt wird. Mit anderen Worten wird bei gleichzeitigem beziehungsweise parallelem Ausführen mehrerer Reparaturzyklen der Reparaturzustand der zumindest einen Funktionseinheit erst dann beurteil, wenn der letzte Reparaturzyklus abgeschlossen ist. Somit erfolgt die Beurteilung des aktuellen Reparaturzustands der zumindest einen Funktionseinheit erst dann, wenn alle parallel abgelaufenen Reparaturzyklen abgeschlossen wurden. Dadurch kann erreicht werden, dass nicht schon frühzeitig der Reparaturzustand beurteilt wird, obwohl noch einer der Reparaturzyklen seine Reparaturmaßnahmen durchführt. Somit würde das Ergebnis bezüglich des aktuellen Reparaturzustands verfälscht werden. Des Weiteren kann nach Abschluss der parallel abgelaufenen Reparaturzyklen überprüft werden, ob nun der fehlerhafte Zustand der zumindest einen Funktionseinheit repariert werden konnte.

Beispielsweise kann die Kompatibilitätsklasse in einer Datenbank, insbesondere des Reparatursystems, abgespeichert werden. Beispielsweise kann bereits im Vorfeld des Betriebs der Basiseinheit zu den jeweiligen Funktionseinheiten eine Kompatibilitätsklasse zugeordnet werden. Somit können effizient die mehreren Reparaturzyklen durchgeführt werden, da bereits im Vorfeld die Kompatibilität und Zuordnung der einzelnen Fehlerzustände in Abhängigkeit ihrer Reparaturzyklen durchgeführt wurden. Somit kann insbesondere während des laufenden Betriebs der Basiseinheit die zumindest eine Funktionseinheit effizienter und rascher repariert werden.

Insbesondere kann jedem Reparaturzyklus individuell eine Zeitdauer oder Durchführungs-Zeitdauer zugeordnet werden. Somit kann systemseitig festgestellt werden, wie lange die einzelnen Reparaturzyklen zur Durchführung ihrer jeweiligen Reparaturmaßnahmen benötigen. Beispielsweise kann hierzu auf die Tabellen 1 und 2 verwiesen werden. Dabei ist in den Tabellen 1 und 2 zu erkennen, dass jeder der Reparaturmaßnahmen des Reparaturzyklus ein geschätzter Gesamtaufwand zugeordnet ist. Anhand dieser jeweiligen geschätzten Gesamtaufwände kann die gesamte Zeitdauer bestimmt werden, welche der komplette Reparaturzyklus zur Durchführung benötigt.

Ein weiterer Aspekt der Erfindung betrifft ein Computerprogrammprodukt, umfassend Befehle, die bei der Ausführung des Computerprogrammprodukt durch einen Computer diesen veranlassen, ein Verfahren nach einem der vorher geschilderten Aspekte oder einem vorteilhaften Ausführungsbeispiel davon auszuführen.

Ein unabhängiger Aspekt der Erfindung betrifft einen elektronisch lesbaren Datenträger mit darauf gespeicherten elektronisch lesbaren Steuerinformationen, welche zumindest ein Computerprogrammprodukt nach dem vorherigen Aspekt umfassen und derart ausgestaltet sind, dass sie bei Verwendung des Datenträgers in einem Reparatursystem ein Verfahren nach einem der vorherigen Aspekte oder einem Ausführungsbeispiel daraus durchführen.

Die Erfindung wird auch definiert durch ein Reparatursystem gemäß der Merkmale des Anspruchs 10.

Beispielsweise kann das geschilderte Verfahren zum Durchführen eines automatischen Reparaturprozesses an zumindest einer Funktionseinheit einer Basiseinheit insbesondere mittels eines Prozessors ausgeführt werden, insbesondere mittels einer Recheneinheit des Reparatursystems ausgeführt werden. Insbesondere ist das Reparatursystem derart ausgebildet, dass es ein computerimplementiertes Verfahren durchführen kann. Insbesondere kann das Reparatursystem einen Computer, einen Mikrocontroller oder einen integrierten Schaltkreis umfassen. Alternativ kann das Reparatursystem einen realen oder virtuellen Verbund von Computern umfassen.

Beispielsweise umfasst das Reparatursystem eine Schnittstelle, einen Prozessor und eine Speichereinheit. Bei einer Schnittstelle kann es sich um eine Hardware- oder Softwareschnittstelle handeln. Eine Recheneinheit kann Hardware-Elemente oder Software-Elemente aufweisen, wie beispielsweise einen Mikroprozessor oder ein sogenanntes FPGA ("Field Programmable Gate Array"). Eine Speichereinheit kann als nicht dauerhafter Arbeitsspeicher ("Random Access Memory") oder als dauerhafter Massenspeicher, wie beispielsweise eine Festplatte, USB-Stick oder SD-Karte, realisiert sein.

Insbesondere kann mit dem vorgeschlagenen Reparatursystem das Verfahren nach einem der vorherigen Aspekte oder einem Ausführungsbeispiel davon ausgeführt werden.

Insbesondere kann das Reparatursystem als Server, Backend oder Datenwolke ausgebildet sein.

Beispielsweise kann das Reparatursystem als HRR-System bezeichnet werden. Insbesondere kann das Reparatursystem mit dem FDIRO-System verknüpft werden oder diese beiden Systeme werden ineinander vereint als kompakte Einheit.

Optional kann das Reparatursystem als eigenständiges, insbesondere redundantes, Steuergerät verwendet werden. Beispielsweise kann das Reparatursystem in der Basiseinheit integriert werden. Dazu kann beispielsweise eine zentrale Einheit des Reparatursystems in der Basiseinheit und einzelne Controller oder Worker des Reparatursystems können in die einzelnen Funktionseinheiten mit integriert werden.

Mithilfe des Reparatursystems kann der Basiseinheit die Möglichkeit geschaffen werden, während seines Betriebs eine ausgefallene Funktionseinheit als Hardwareeinheit wieder herzustellen. Dabei können insbesondere redundante Funktionseinheiten der Basiseinheit wieder hergestellt werden, indem zumindest eine dieser Funktionseinheiten repariert werden kann. Des Weiteren kann die Lebenszeit der Basiseinheit auch ohne Wartung oder manuellen Reparaturen verlängert werden, da der automatische Reparaturprozess während des Betriebs durchgeführt werden kann. Somit kann insbesondere der aktive Betrieb der Basiseinheit verlängert werden. Somit ergibt sich beispielsweise eine Kosteneffizienz und eine höhere Kundenzufriedenheit bezüglich der Basiseinheit. Die durchgeführten Reparaturmaßnahmen und/oder detektierten Fehler können anderweitigen Informationsstellen oder Werkstätten bereitgestellt werden, sodass diese bei zukünftigen Fehlern berücksichtigt werden können. Des Weiteren kann der Fehlerfall-Typ-Klasse oder den Fehlerkatalog neue Fehlerursachen und/oder neue Lösungsansätze und/oder neue Fehlerzustände per Over-the-Air-Softwareupdates zur Verfügung gestellt werden. Somit kann die Basiseinheit stetig durch neue Erkenntnisse verbessert werden.

Des Weiteren können mehrere Reparaturzyklen parallel abgearbeitet werden, sodass eine schnellere Wiederherstellung der Funktionseinheit, insbesondere der Redundanz, durchgeführt werden kann. Dies kann insbesondere bei autonomen Systemen dann von Vorteil sein, da bei Ausfall einer Redundanz eine Deaktivierung der Basiseinheit durchgeführt werden kann.

Mithilfe der aufgelisteten Fehlerlösungsansätze, also die Fehlerzustände, in der Fehlerfall-Typ-Klasse kann eine Zertifizierung und Validierung des Reparatursystems ermöglicht werden.

In einem Ausführungsbeispiel der Erfindung ist vorgesehen, dass die elektronische Recheneinheit, die Auswerteeinheit und die Verarbeitungseinheit des Reparatursystems mit einem neuronalen Netz verbunden sind. Insbesondere können alle Einheiten und/oder Komponenten des Reparatursystems über neuronale Netze miteinander verknüpft werden. Dadurch können anhand der fehlerhaften Funktionseinheiten eigenständig durch fortlaufende Lernprozesse passende Reparaturzyklen ausgewählt werden. Somit kann ein dynamischer Lernprozess zur Durchführung eines automatischen Reparaturprozesses der zumindest einen Funktionseinheit durchgeführt werden. Somit erfolgt der automatische Reparaturprozess der zumindest einen Funktionseinheit mittels einer künstlichen Intelligenz. Somit kann eine dynamische Festlegung der Fehlerfall-Typ-Klasse und insbesondere die Priorisierung durchgeführt werden.

In einem weiteren Ausführungsbeispiel der Erfindung ist vorgesehen, dass die Basiseinheit als Fahrzeug und die zumindest eine Funktionseinheit als Sensor ausgebildet sind. Beispielsweise kann es sich bei dem als Basiseinheit ausgebildeten Fahrzeug um ein teilautonom betriebenes, insbesondere vollautonom betriebenes, Fahrzeug handeln. Insbesondere handelt es sich bei dem Fahrzeug um ein hochautomatisiertes Fahrzeug. Ebenso kann es sich bei dem Fahrzeug um einen Personenkraftwagen oder um einen Lastkraftwagen handeln. Ebenso denkbar ist, dass es sich bei dem Fahrzeug um ein Elektrofahrzeug handelt. Dabei kann die zumindest eine Funktionseinheit ein Sensor, wie beispielsweise ein Ultraschallsensor, des Fahrzeugs sein. Insbesondere kann die Funktionseinheit jede beliebige Fahrzeugkomponente und/oder Fahrzeugsystem des Fahrzeugs darstellen.

Insbesondere kann es sich bei der Basiseinheit um ein autonom betriebenes Fahrzeug oder um ein Fahrzeug mit Fahrerassistenzsystemen oder um Fahrzeuge mit Warnsystemen handeln.

Insbesondere kann es sich bei dem Fahrzeug als Basiseinheit um ein Fahrzeug mit einem Autonomielevel SAE Level 1 bis Level 5 handeln. Insbesondere können die beliebigsten Fahrzeugtypen als Basiseinheit angesehen werden.

Insbesondere kann es sich bei der Basiseinheit um eine Anwendung der Mobilität handeln.

Alternativ kann es sich bei der Basiseinheit um eine Fertigungsstraße oder um Transportbänder oder um einen Roboter oder um eine Logistikeinheit handeln. Alternativ kann es sich bei der Basiseinheit um eine mechanische, chemische, thermische Verfahrenstechnik beziehungsweise Verfahrensanlage handeln. Ebenfalls denkbar ist es, dass es sich bei der Basiseinheit um ein Atomkraftwerk, Kohlekraftwerk, Solarkraftwerk, Wasserkraftwerk oder Windkraftwerk handeln. Alternativ kann es sich bei der Basiseinheit um ein Flugzeug oder um einen Lufthafenterminal oder um eine Gepäcksortieranlage handeln. Ebenfalls kann es sich bei der Basiseinheit um einen Satelliten oder um ein Raumschiff handeln. Alternativ kann es sich bei der Basiseinheit um Einheiten des Güter- und Schienenverkehrs handeln. Insbesondere handelt es sich bei der Basiseinheit um ein beliebiges System, welches teilautomatisiert oder vollautomatisiert ist.

Ausführungsbeispiele einzelner Aspekte können als vorteilhafte Ausführungsbeispiele der anderen Aspekte und umgekehrt angesehen werden.

Zu der Erfindung gehören auch Weiterbildungen des erfindungsgemäßen Computerprogrammprodukts und des erfindungsgemäßen Reparatursystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Computerprogrammprodukts und des erfindungsgemäßen Reparatursystems hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung einer Basiseinheit und einer Funktionseinheit, sowie eines erfindungsgemäßen Reparatursystems;
- Fig. 2: beispielhafte Verfahrensschritte für die Durchführung eines Reparaturprozesses an der Funktionseinheit aus Fig.1 mittels des Reparatursystems aus Fig.1; und
- Fig. 3: eine schematische Darstellung eines Teilschrittes der Verfahrensschritte aus Fig.2.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

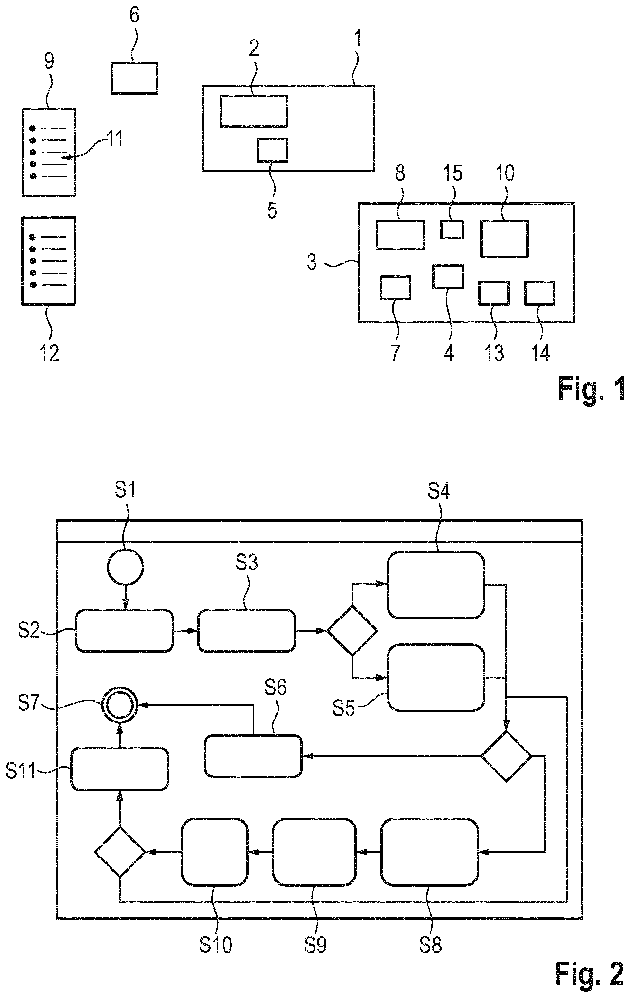

In der Fig. 1 ist schematisch eine Basiseinheit 1 dargestellt. Bei der Basiseinheit 1 handelt es sich insbesondere um ein automatisiertes, insbesondere autonomes, System. Dabei kann es sich bei der Basiseinheit 1 um die verschiedensten Arten von Systemen der Automatisierungstechnik handeln. Beispielsweise kann es sich bei der Basiseinheit 1 um ein hochautomatisiertes oder vollautonom betriebenes oder teilautonom betriebenes Fahrzeug handeln. Die Basiseinheit 1 beinhaltet zumindest eine Funktionseinheit 2. Die Funktionseinheit 2 ist insbesondere Bestandteil der elektronischen oder elektromechanischen oder mechanischen Komponenten der Basiseinheit 1. Mit anderen Worten wird die Funktionseinheit 2 für den Betrieb der Basiseinheit 1 verwendet.

Beispielsweise kann es sich bei der Funktionseinheit 2 um einen Sensor, eine Kamera, ein Förderband, eine Farbbearbeitungsstraße, eine Auswerteeinheit, einen Mikroprozessor, eine Steuerungseinheit, ein Roboter, oder eine Fertigungsanlage handeln. Diese Beispiele sollen nicht abschließend zu verstehen sein, sondern lediglich einen kleinen Ausschnitt der vielfältigsten Möglichkeiten der Funktionseinheit 2 beschreiben.

Da es sich bei der Basiseinheit 1 insbesondere um eine automatisierte Einheit handelt, ist es von großer Bedeutung, dass ein kontinuierlicher Arbeitsprozess beziehungsweise Betrieb sichergestellt werden kann. Ein kontinuierlicher und fortlaufender Arbeitsgang der Basiseinheit 1 kann nur dann fortgeführt werden, wenn die zumindest eine Funktionseinheit 2 oder andere Funktionseinheiten der Basiseinheit 1 funktionsfähig sind. Insbesondere können automatisierte Systeme redundante Funktionseinheiten aufweisen, sodass der Ausfall einer Funktionseinheit und die jeweilige Funktion dieser Funktionseinheit 2 von einer anderen Funktionseinheit aufgefangen werden kann.

Um hierfür Abhilfe schaffen zu können, kann das erfindungsgemäße Verfahren zum Durchführen eines automatischen Reparaturprozesses an der zumindest einen Funktionseinheit 2 der Basiseinheit 1 angewendet werden. Somit kann während des laufenden Betriebs der Basiseinheit 1 bei einer Fehlfunktion der Funktionseinheit 2 die Funktionseinheit 2 automatisch repariert werden.

Ein solcher beispielhafter automatischer Reparaturprozess wird nun in der Fig. 2 mittels eines beispielhaften Ablaufdiagramms erläutert.

Insbesondere kann der automatische Reparaturprozess (welcher in der Fig. 2 erläutert wird) an der zumindest einen Funktionseinheit 2 mittels eines Reparatursystems 3 (vergleiche Fig. 1) ausgeführt beziehungsweise durchgeführt werden. Beispielsweise kann es sich bei dem Reparatursystem 3 um ein in der Basiseinheit 1 integriertes System handeln. Ebenfalls kann es sich bei dem Reparatursystem 3 um ein dezentrales, elektronisches System handeln. Insbesondere kann das Reparatursystem 3 vollständig oder teilweise in ein Backend oder einer Datenwolke integriert sein.

Das erfindungsgemäße Verfahren zum Durchführen eines automatischen Reparaturprozesses an der zumindest einen Funktionseinheit 2 der Basiseinheit 3 kann auch in Form eines Computerprogrammprodukts vorliegen, das das Verfahren auf einer Steuereinheit 4 (vergleiche Fig. 1) implementiert, wenn es auf der Steuereinheit 4 ausgeführt wird. Ebenso kann ein elektronisch lesbarer Datenträger mit darauf gespeicherten elektronisch lesbaren Steuerinformationen vorliegen, welche zumindest ein beschriebenes Computerprogrammprodukt umfassen und derart ausgestaltet sind, dass sie bei Verwendung des Datenträgers in der Steuereinheit 4 des Reparatursystems 3 das erfindungsgemäße Verfahren durchführen.

In einem ersten Schritt S1 wird mittels einer Detektionseinheit 5 (vergleiche Fig. 1) ein fehlerhafter Zustand oder optional ein Defekt der zumindest einen Funktionseinheit 2 detektiert beziehungsweise erfasst.

Die Detektionseinheit 5 kann beispielsweise Bestandteil des elektronischen Reparatursystems 3 oder der Basiseinheit 1 sein. Insbesondere kann mit Hilfe der Detektionseinheit 5 die Funktionsfähigkeit der zumindest einen Funktionseinheit 2 kontinuierlich überwacht und überprüft werden.

Eine andere Möglichkeit der Feststellung des fehlerhaften Zustands der zumindest einen Funktionseinheit 2 ist die Verwendung eines FDIRO-Systems 6 (vergleiche Fig. 1), welches in der Basiseinheit 1 integriert ist oder als separate Einheit ausgebildet ist, eine fehlerhafte Funktionseinheit 2 detektiert werden. Wenn mit dem FDIRO-System 6 ein fehlerhafter Zustand der Funktionseinheit 2 detektiert wurde, kann zum Schutz der Basiseinheit 1 diese fehlerhafte Funktionseinheit 2 von den restlichen elektronischen Komponenten der Basiseinheit 1 isoliert beziehungsweise abgekapselt werden. Somit kann von dieser Funktionseinheit 2 beispielsweise keinerlei Gefahr oder Störungen oder Beschädigungen für die Basiseinheit 1 ausgehen.

In einem nachfolgenden zweiten Schritt S2 wird der fehlerhafte Zustand der zumindest einen Funktionseinheit 2 analysiert. Dies erfolgt mittels einer elektronischen Auswerteeinheit 7 (vergleiche Fig. 1) des Reparatursystems 3. Bei der elektronischen Auswerteeinheit 7 kann es sich insbesondere um eine elektronische Datenverarbeitungseinheit handeln. Dabei können insbesondere eine Fehlerzustandsinformation und/oder eine Art der Funktionseinheit 2 und/oder eine Modellinformation der Funktionseinheit 2 bestimmt werden. Erfindungsgemäß wird ein Typ der Funktionseinheit bestimmt.

Ebenfalls denkbar ist, dass diese Informationen bereits in einer Datenbank 8 (vergleiche Fig. 1) des Reparatursystems 3 abgespeichert sind. Somit können diese Informationen der fehlerhaften Funktionseinheit 2 zugeordnet werden.

In einem nachfolgenden dritten Schritt S3 wird die zumindest eine Funktionseinheit 2 einer Fehlerklasse oder einer Fehlerfall-Typ-Klasse 9 (vergleiche Fig. 1) zugeordnet. Bei der Fehlerfall-Typ-Klasse 9 handelte es sich insbesondere um eine digitale Datenbank, welche entweder in dem Reparatursystem 3 integriert ist oder als externer Datenspeicher oder Datenwolke ausgebildet ist. In der Fehlerfall-Typ-Klasse 9 werden zu jeder Art von Funktionseinheiten mögliche auftretende Fehlerzustände und/oder Fehlerfälle charakterisiert. Somit kann eindeutig eine bestimmte Fehlerfall-Typ-Klasse 9 der entsprechenden Art der Funktionseinheit 2 zugeordnet werden. Dies kann beispielsweise eine elektronische Recheneinheit 10 (vergleiche Fig. 1) des Reparatursystems 3 durchgeführt werden. Dabei erfolgt die Zuordnung der Funktionseinheit 2 anhand des bestimmten oder bereitgestellten Typs der Funktionseinheit 2 zu einer charakterisierenden Fehlerfall-Typ-Klasse 9.

Erfindungsgemäß werden der Fehlerfall-Typ-Klasse 9 mehrere, insbesondere zumindest zwei verschiedene Fehlerzustände 11 (vergleiche Fig. 1) zugeordnet. Somit enthält jede Fehlerfall-Typ-Klasse 9 zu dem jeweiligen Typ der Funktionseinheit 2 zugehörige Fehlerzustände. Mit den Fehlerzuständen 11 (vergleiche Fig. 1) werden insbesondere die verschiedenen Möglichkeiten von auftretenden Fehlern in oder an der Funktionseinheit 2 charakterisiert.

In einem optionalen dritten Schritt S3 können diese Typen der Funktionseinheit 2 zugeordnete Fehlerzustände 11 vorbereitet werden. Um eine möglichst effiziente Reparateur beziehungsweise einen effizienten Reparaturprozess der Funktionseinheit 2 durchführen zu können, können die einzelnen Fehlerzustände 11 anhand einer Prioritätsreihenfolge priorisiert beziehungsweise gewichtet werden. Dabei kann beispielsweise anhand vergangener, durchgeführter Reparaturprozesse festgelegt werden, welche Fehlerzustände am häufigsten vorkommen und welche Fehlerzustände zuerst abgearbeitet werden können. Somit kann verhindert werden, dass nicht unnötige Fehlerzustände betrachtet werden, obwohl bereits ein entscheidender Fehlerzustand allein ausreichen würde, um die Funktionsfähigkeit der Funktionseinheit 2 wieder herzustellen. Insbesondere kann jedem dieser Fehlerzustände 11 ein individueller Reparaturzyklus beziehungsweise Lösungsansatz zum Reparieren der Funktionseinheit 2 zur Verfügung gestellt beziehungsweise zugeordnet werden.

In einem optionalen vierten Schritt S4 kann jedem der individuellen, spezifischen Reparaturzyklen eine vorgegebene Anzahl an verschiedenen softwarebasierten Reparaturmaßnahmen und/oder hardwarebasierten Reparaturmaßnahmen zum Reparieren der zumindest einen Funktionseinheit 2 zugeordnet werden. Diese Reparaturzyklen werden nacheinander ausgeführt. Insbesondere weist jeder der Fehlerzustände 11 eine eigene Anzahl und/oder Art von Reparaturmaßnahmen auf. Für den Fall das ein Reparaturzyklus ausgeführt wird, so werden insbesondere alle darin enthaltenen softwarebasierten und/oder hardwarebasierten Reparaturmaßnahmen durchgeführt. Ein Fehlerzustand 11 kann nur dann erfolgreich abgeschlossen werden, wenn der komplette individuelle Reparaturzyklus ausgeführt wurde. Somit kann erreicht werden, dass eine effiziente, aktive, automatische Reparatur der Funktionseinheit 2 durchgeführt werden kann.

Um die Fehlerzustände 11 besser priorisieren zu können, kann jedem der Fehlerzustände 11 eine individuelle Priorisierungsnummer zugeordnet werden. Anhand dieser, insbesondere zahlenmäßigen, Priorisierungsnummer, kann für jeden Fehlerzustand dessen Priorität definiert beziehungsweise zugeteilt werden. Somit kann insbesondere mit Hilfe des Reparatursystems 3 sofort erkannt werden, welcher der Fehlerzustände die höchste Priorität beziehungsweise Wichtigkeit aufweist.

Beispielsweise kann zur Definition der Priorisierungsnummern der Fehlerzustände 11 eine FMEA-Analyse ("failure mode and effects analysis") angewendet werden. Dabei kann beispielsweise als Priorisierungsnummer eine Risiko-Prioritäts-Zahl verwendet werden. Dabei kann die Priorisierungsnummer jedes Fehlerzustands in Abhängigkeit von einer Entdeckungswahrscheinlichkeitsinformation und/oder einer Fehlerfolgeinformation und/oder einer Auftretenswahrscheinlichkeitsinformation generiert werden. Dies kann beispielsweise mit Hilfe der elektronischen Recheneinheit 10 durchgeführt werden. Gegebenenfalls kann die statische Zuteilung der Fehlerzustände 11 von Fachexperten oder eines zuständigen Gremium festgelegt werden. Die dynamische Änderung der Priorisierung kann entweder manuell durch ein Over-the-Air-Update durch eine Bedienperson oder durch die elektronische Recheneinheit 10, insbesondere eines neuronalen Netzes, erfolgen.

Insbesondere können die verschiedensten Parameter aus vergangenen Datensätzen oder Wartungsarbeiten und/oder wissenschaftlichen Analysen und/oder von externen Informationen verwendet werden. Somit kann jeder Fehlerzustand anhand der generierten Priorisierungsnummer eindeutig priorisiert beziehungsweise gewichtet werden. Insbesondere kann die Entdeckungswahrscheinlichkeitsinformation und/oder die Fehlerfolgeinformation und/oder die Auftretenswahrscheinlichkeitsinformation in Abhängigkeit von dem automatischen Reparaturprozess kontinuierlich angepasst werden. Somit kann eine dynamische Anpassung der Parameter zur Festlegung der Priorisierungsnummer erfolgen.

Ein optionaler fünfter Schritt S5 kann angewendet werden, wenn der Typ der Funktionseinheit 2 keiner Fehlerfall-Typ-Klasse 9 zugeordnet werden konnte. In diesem Fall kann also keine spezifische Fehlerfall-Typ-Klasse 9 der Funktionseinheit 2 eindeutig zugeordnet werden. Um trotzdem einen möglichst effizienten Reparaturprozess der Funktionseinheit 2 durchführen zu können, kann in diesem Fall eine Default-Fehlerfall-Typ-Klasse 12 (vergleiche Fig. 1) dem Typ der Funktionseinheit 2 zugeordnet werden. Insbesondere handelt es sich bei dieser Default-Fehlerfall-Typ-Klasse 12 um eine standardisierte alternative Möglichkeit, trotz unbekannten Typs der Funktionseinheit 2 einen automatischen Reparaturprozess durchzuführen. Mit anderen Worten ausgedrückt spiegelt die Default-Fehlerfall-Typ-Klasse 12 eine Zusammenfassung aller möglichen Fehlerzustände der Funktionseinheit 2 wieder. Diese möglichen Fehlerzustände können hierarchisch priorisiert werden.

Bei der Fehlerfall-Typ-Klasse 9 und der Default-Fehlerfall-Typ-Klasse 12 kann es sich insbesondere um Klassifizierungsdatenbanken handeln.

Insbesondere kann in der Default-Fehlerfall-Typ-Klasse 12 eine vorgegebene Anzahl von verschiedenen Reparaturzyklen und/oder Reparaturmaßnahmen definiert werden. Insbesondere können bei der Verwendung der Default-Fehlerfall-Typ-Klasse 12 alle zur Verfügung stehenden Reparaturzyklen einmal an der Funktionseinheit 2 durchgeführt werden.

In einem nachfolgenden optionalen sechsten Schritt S6 kann nach der Durchführung aller möglichen Reparaturzyklen der Default-Fehlerfall-Typ-Klasse 12 überprüft werden, ob der fehlerhafte Zustand der zumindest einen Funktionseinheit 2 repariert werden konnte. Falls dies nicht der Fall ist, so kann in diesem Fall der fehlerhafte Zustand der mindestens einen F2 nicht behoben werden. Somit kann in einem optionalen Schritt S7 als Beurteilungsergebnis die zumindest eine Funktionseinheit 2 als nicht einsatzbereit beziehungsweise nicht wieder hergestellt beziehungsweise nicht repariert der Basiseinheit 1 nicht wieder zur Verfügung gestellt werden. Dabei können in diesem Schritt diese Informationen über kommunikationstechnische Verbindungen einen Service anbieten oder einer Werkstatt oder eine Reparaturwerkstatt mitgeteilt werden, sodass bei einer zukünftigen Wartungsarbeit an der Basiseinheit 2 das Problem der zumindest einen Funktionseinheit 2 behoben werden kann.

Für den Fall, dass nun die Fehlerfall-Typ-Klasse 9 zu der Funktionseinheit 2 zugeordnet werden konnte, so kann anschließend an den vorherigen vierten Schritt S4 in einem optionalen achten Schritt S8 der Fehlerzustand ausgewählt werden, welcher die höchste Priorität, anhand der Priorisierungsnummer, aufweist. Dies kann insbesondere mit einer elektronischen Verarbeitungseinheit 13 (vergleiche Fig. 1) des Reparatursystems 3 durchgeführt werden. Somit wird nach der Auswahl des Fehlerzustands mit der höchsten Priorität der zu diesem Fehlerzustand zugehörige Reparaturzyklus an der zumindest einen Funktionseinheit 2 ausgeführt beziehungsweise durchgeführt.

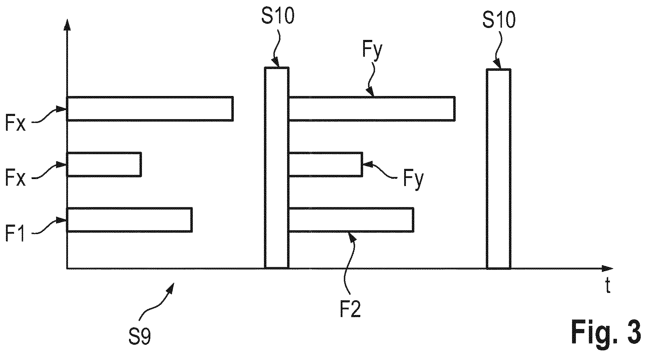

Beispielsweise kann in einem nachfolgenden neunten Schritt S9 zu dem bereits ausgewählten und ausgeführten Reparaturzyklus des Fehlerzustands mit der höchsten Priorität F1 (vergleiche Fig. 3) weitere Fehlerzustände Fx (vergleiche Fig. 3) ausgewählt werden.

Dieser Ablauf des neunten Schritts S9 wird nun anhand der Fig. 3 genauer erläutert. Um einen Reparaturprozess an der zumindest einen Funktionseinheit 2 möglichst effizient durchführen zu können, ist es von Vorteil, wenn mehrere Fehlerzustände und insbesondere mehrere Reparaturzyklen gleichzeitig, insbesondere parallel, ausgeführt werden. Um dies ermöglichen zu können, werden erfindungsgemäß einzelne Fehlerzustände Fx der zumindest einen Funktionseinheit 2 hinsichtlich einer Kompatibilität ihrer Reparaturzyklen zueinander klassifiziert beziehungsweise kategorisiert. Dabei können stets kompatible Fehlerzustände 11 zu einer Kompatibilitätsklasse zugeordnet werden. Somit können die Fehlerzustände, welche gleichzeitig an der Funktionseinheit 2 ausgeführt werden können, ein und derselben Kompatibilitätsklasse zugeordnet werden. Somit sind wie in dem zeitlichen Verlauf in der Fig. 3 zu sehen, zusätzlich zu dem ersten Fehlerzustand F1 mit der höchsten Priorität die weiteren Fehlerzustände Fx, welche kompatibel zu dem ersten Fehlerzustand sind, ausgewählt. Somit erfolgt bei der gleichzeitig, insbesondere parallel, zu der Ausführung des ersten Fehlerzustands F1 die Ausführung des Reparaturzyklus des Fehlerzustands F1 und der Reparaturzyklen der weiteren Fehlerzustände Fx. Somit können mehrere Reparaturzyklen gleichzeitig durchgeführt werden. Insbesondere werden der erste Fehlerzustand F1 und die weiteren Fehlerzustände Fx gleichzeitig ausgeführt. Beispielsweise weist jeder Fehlerzustand 11 eine Verarbeitungsdauer beziehungsweise Abarbeitungsdauer auf. Mit anderen Worten weist jeder Fehlerzustand 11 eine vorgegebene Zeitdauer auf, innerhalb welcher der Reparaturzyklus jedes Fehlerzustands ausgeführt beziehungsweise abgearbeitet werden kann. Der Reparaturzyklus, welcher im Vergleich zu den anderen Reparaturzyklen dieser Kompatibilitätsklasse die längste Zeitdauer zur Ausführung benötigt wird als letztes beendet. Insbesondere wird solange abgewartet, bis alle Reparaturzyklen, welche parallel zu dem ersten Testzustand F1 durchgeführt werden, abgearbeitet wurden.

In dem schematischen Beispiel in der Fig. 3 wäre es der zweite Fehlerzustand von der Zeitachse unten betrachtet.

Wieder zurück zu der Fig. 2. Nach Abschluss des neunten Schrittes S9 wird in einem zehnten Schritt S10 nach der Durchführung des ausgewählten ersten Fehlerzustands F1 und der parallelen Fehlerzustände Fx ein aktueller Reparaturzustand der zumindest einen Funktionseinheit 2 beurteilt. Somit wird, wie in der Fig. 3 zu sehen, nach Abschluss des Reparaturzyklus, welcher die längste Verarbeitungsdauer beziehungsweise Zeitdauer aufweist, der aktuelle Reparaturzustand der Funktionseinheit 2 überprüft. Dabei kann für die Beurteilung des aktuellen Reparaturzustands ein vorgegebener Referenzzustand der zumindest einen Funktionseinheit 2, in welchem die zumindest eine Funktionseinheit 2 keinen fehlerhaften Zustand aufweist, vergleichen werden. Mit anderen Worten wird mit dem Reparaturzustand der Zustand repräsentiert, in welchem die Funktionseinheit 2 vollständig funktionsfähig und einsatzbereit ist. Dies kann insbesondere mit der elektronischen Auswerteeinheit 7 des Reparatursystems 3 durchgeführt werden. Insbesondere wird dabei überprüft beziehungsweise beurteilt, ob die zumindest eine Funktionseinheit 2 weiterhin den fehlerhaften Zustand aufweist oder nicht. Falls der fehlerhafte Zustand der zumindest einen Funktionseinheit 2 behoben werden konnte, und somit die Funktionseinheit 2 wieder vollständig einsatzbereit und repariert beziehungsweise wieder hergestellt werden konnte, kann in einem optionalen elften Schritt S11 die Funktionseinheit 2 wieder als aktive Einheit in der Basiseinheit 1 verwendet werden und insbesondere von der Basiseinheit 1 wieder benutzt werden. Somit kann die Basiseinheit 1 wieder vollständig betrieben werden, ohne sicherheitsrelevante Bedenken bezüglich einer fehlerhaften Funktionseinheit. Anschließend an den elften Schritt S11 kann wieder zum letzten Schritt S7 gesprungen werden.

Sollte jedoch bei der Beurteilung im zehnten Schritt S10 festgestellt werden, dass die Funktionseinheit 2 weiterhin den fehlerhaften Zustand aufweist, so kann zusätzlich ein weiterer Reparaturzyklus eines zweiten Fehlerzustands F2 (vergleiche Fig. 3) der Fehlerfall-Typ-Klasse 9 durchgeführt werden. Somit erfolgt ein rekursiver Prozessablauf. Somit wird nach dem zehnten Schritt S10 wieder zu dem achten Schritt S8 zurück gesprungen. Somit wird hier wiederum der Fehlerzustand ausgewählt, welcher die ausgehend von dem ersten Fehlerzustand F1 nächsthöhere Priorität aufweist. Somit wird rekursiv und kontinuierlich überprüft, welcher Fehlerzustand noch nicht ausgewählt wurde und welcher der nächstfolgen, noch nicht ausgewählte Fehlerzustand ist. Dies erfolgt automatisch anhand der Priorisierungsnummern. Dabei kann nun wiederum der zweite Fehlerzustand F2 ausgeführt werden. Dazu kann wiederum, wie in der Fig. 3 dargestellt, erneut überprüft werden, welche weiteren Fehlerzustände kompatibel zu diesem zweiten Fehlerzustand F2 sind. Insbesondere wird jeder Fehlerzustand der Fehlerfall-Typ-Klasse 9 nur ein einziges Mal durchgeführt. Somit wird jeder Fehlerzustand einmal ausgeführt und es kann zu keiner doppelten oder vielfachen Ausführung beziehungsweise Durchführung kommen. Somit kann der zweite Fehlerzustand F2 parallel mit weiteren Fehlerzuständen Fy ausgeführt werden. Anschließend nach der Ausführung des zweiten Fehlerzustands F2 und der damit kompatiblen parallel ausgeführten Fehlerzustände Fy kann wieder überprüft werden, ob der aktuelle Reparaturzustand der Funktionseinheit 2 fehlerfrei ist. Dies erfolgt wiederum in dem zehnten Schritt S10. Insbesondere werden die Schritt S8 bis S10 so lange durchgeführt, bis insbesondere die Funktionseinheit 2 vollständig repariert werden konnte, oder keine erfolgreiche Reparatur durchgeführt werden konnte, trotz Durchführung aller möglichen Maßnahmen. Somit kann ein rekursiver Zyklus für den Reparaturprozess der Funktionseinheit 2 durchgeführt werden.

Besonders vorteilhaft wäre, wenn die elektronische Recheneinheit 10 mit einer Maschinenlerneinheit 14 (vergleiche Fig. 1) ausgestattet ist. Mit Hilfe dieser Maschinenlerneinheit 14 kann bei der Beurteilung des aktuellen Reparaturzustands die elektronische Recheneinheit 10 maschinell trainiert werden. Insbesondere kann ebenfalls in Abhängigkeit der durchgeführten Beurteilungsergebnisse bezüglich des Reparaturzustands die Generierung der Priorisierungsnummern maschinell trainiert werden. Somit kann ein fortlaufender Lernprozess für das Reparatursystem 3 erreicht werden. Insbesondere kann dadurch eine erfolgversprechendere und effizientere Reparaturmaßnahme der Funktionseinheit 2 und insbesondere der Basiseinheit 1 durchgeführt werden. Dies erfolgt insbesondere während des laufenden Betriebs der Basiseinheit 1. Beispielsweise kann des Weiteren das Reparatursystem 3 ein neuronales Netzwerk 15 (vergleiche Fig. 1) aufweisen. Mit Hilfe des neuronalen Netzwerks 15 können alle Systeme des Reparatursystems 3 untereinander vernetzt werden, sodass ein intelligenter Reparaturprozess der Funktionseinheit 2 mittels künstlicher Intelligenz durchgeführt werden kann.

### Bezugszeichenliste

- 1: Basiseinheit
- 2: Funktionseinheit
- 3: Reparatursystem
- 4: Steuereinheit
- 5: Detektionseinheit
- 6: FDIRO-System
- 7: Auswerteeinheit
- 8: Datenbank
- 9: Fehlerfall-Typ-Klasse
- 10: elektronische Recheneinheit
- 11: Fehlerzustände
- 12: Default-Fehlerfall-Typ-Klasse
- 13: Verarbeitungseinheit
- 14: Maschinenlerneinheit
- 15: neuronales Netzwerk
- S1-S11: erster bis elfter Schritt
- F1: erster Fehlerzustand
- F2: zweiter Fehlerzustand
- Fx, Fy: weitere Fehlerzustände

## Patentansprüche

1. Verfahren zum Durchführen eines automatischen Reparaturprozesses an zumindest einer Funktionseinheit (2) einer Basiseinheit (1), bei welchem folgende Schritte durchgeführt werden:
- Detektion eines fehlerhaften Zustands der zumindest einen Funktionseinheit (2) mit einer Detektionseinheit (5) (S1);
- Bestimmen eines Typs der zumindest einen Funktionseinheit (2) mit einer Auswerteeinheit (7) oder Bereitstellen einer Information, die den Typ der zumindest einen Funktionseinheit (2) charakterisiert (S2);
- Zuordnen der zumindest einen Funktionseinheit (2) zu einer den bestimmten Typ der Funktionseinheit (2) charakterisierenden Fehlerfall-Typ-Klasse (9), bei welcher es sich um eine Klassifizierungsdatenbank bezüglich der möglichen Fehlerzustände des jeweiligen Typs der Funktionseinheit (2) handelt, wobei einer Fehlerfall-Typ-Klasse (9) zumindest zwei verschiedene Fehlerzustände (11) zugeordnet werden (S3), die in einer Prioritätsreihenfolge priorisiert werden, wobei jedem Fehlerzustand (11) ein individueller Reparaturzyklus, bei welchem es sich um eine vorgegebene Reparaturmaßnahme handelt, für die Funktionseinheit (2) zugeordnet wird (S4);
- Auswählen eines ersten Fehlerzustands (F1) der zumindest zwei Fehlerzustände (11) mit der höchsten Priorität (S8);
- Durchführen des dem ausgewählten ersten Fehlerzustand (F1) zugeordneten Reparaturzyklus an der zumindest einen Funktionseinheit (2) (S8);
- Beurteilen eines aktuellen Reparaturzustands der zumindest einen Funktionseinheit (2) nach Abschluss des durchgeführten Reparaturzyklus des ersten Fehlerzustands (F1) (S10), wobei einzelne Fehlerzustände (11) der zumindest einen Funktionseinheit (2) hinsichtlich einer Kompatibilität ihrer Reparaturzyklen zueinander klassifiziert werden, wobei jeweils kompatible Fehlerzustände zu einer Kompatibilitätsklasse zugeordnet werden (S9), wobei die Fehlerzustände (11), deren Reparaturzyklen gleichzeitig an der Funktionseinheit (2) ausgeführt werden können, ein und derselben Kompatibilitätsklasse zugeordnet werden;
- Auswählen zusätzlich zu dem ausgewählten ersten Fehlerzustand (F1) weitere Fehlerzustände (Fx), welche die gleiche Kompatibilitätsklasse wie des ersten Fehlerzustands (F1) aufweisen, wobei Reparaturzyklen dieser weiteren Fehlerzustände (Fx) zumindest zeitweise gleichzeitig zum Reparaturzyklus des ersten Fehlerzustands (F1) an der zumindest einen Funktionseinheit (2) ausgeführt werden (S9); und
- Ausführen der Reparaturzyklen der weiteren Fehlerzustände (Fx) und des Reparaturzyklus des ersten Fehlerzustands (F1) jeweils innerhalb einer vorgegebenen Zeitdauer, wobei unmittelbar nach dem Ende des durchgeführten Reparaturzyklus, welcher im Vergleich zu den anderen Reparaturzyklen dieser Kompatibilitätsklasse die längste Zeitdauer zur Ausführung benötigt, der aktuelle Reparaturzustand der zumindest einen Funktionseinheit (2) beurteilt wird (S9).

2. Verfahren nach Anspruch 1, wobei
ein vorgegebener Referenzzustand der zumindest einen Funktionseinheit (2), in welchem die zumindest eine Funktionseinheit (2) keinen fehlerhaften Zustand aufweist, bei der Beurteilung des aktuellen Reparaturzustands der zumindest einen Funktionseinheit (2) berücksichtigt wird (S10).

3. Verfahren nach Anspruch 1 oder 2, wobei
der aktuelle Reparaturzustand der zumindest einen Funktionseinheit (2) dahingehend beurteilt wird, ob die zumindest eine Funktionseinheit (2) weiterhin den fehlerhaften Zustand aufweist (S10).

4. Verfahren nach Anspruch 3, wobei
dann, wenn die zumindest eine Funktionseinheit (2) weiterhin den fehlerhaften Zustand aufweist, zusätzlich ein Reparaturzyklus eines zweiten Fehlerzustands (F2) der Fehlerfall-Typ-Klasse (9) durchgeführt wird, welcher im Vergleich zum ersten Fehlerzustand (F1) eine niedrigere Priorität aufweist, wobei nach Abschluss des durchgeführten Reparaturzyklus des zweiten Fehlerzustands (F2) der aktuelle Reparaturzustand der zumindest einen Funktionseinheit (2) beurteilt wird (S10).

5. Verfahren nach einem der vorhergehenden Ansprüche, wobei
dann, wenn der Typ der Funktionseinheit (2) keiner Fehlerfall-Typ-Klasse (9) zugeordnet werden kann, in diesem Fall eine Default-Fehlerfall-Typ-Klasse (12) dem Typ der Funktionseinheit (2) zugeordnet wird, wobei in Abhängigkeit von der Default-Fehlerfall-Typ-Klasse (12) eine vorgegebene Anzahl von verschiedenen Reparaturzyklen an der zumindest einen Funktionseinheit (2) durchgeführt wird (S5).

6. Verfahren nach einem der vorhergehenden Ansprüche, wobei
jedem individuellen Reparaturzyklus eine vorgegebene Anzahl an verschiedenen softwarebasierten Reparaturmaßnahmen und/oder hardwarebasierten Reparaturmaßnahmen zum Reparieren der zumindest einen Funktionseinheit (2) zugeordnet werden (S4).

7. Verfahren nach einem der vorhergehenden Ansprüche, wobei
jedem der zumindest zwei Fehlerzustände (11) eine individuelle Priorisierungsnummer zugeordnet wird, wobei in Abhängigkeit von der jeweiligen Priorisierungsnummer die Priorität jedes Fehlerzustands (11) definiert wird (S4).

8. Verfahren nach Anspruch 7, wobei
die Priorisierungsnummer jedes Fehlerzustands in Abhängigkeit von einer Entdeckungswahrscheinlichkeitsinformation und/oder einer Fehlerfolgeinformation und/oder einer Auftretenswahrscheinlichkeitsinformation mit einer elektronischen Recheneinheit (10) generiert wird, insbesondere die Entdeckungswahrscheinlichkeitsinformation und/oder die Fehlerfolgeinformation und/oder die Auftretenswahrscheinlichkeitsinformation in Abhängigkeit von dem Beurteilen des aktuellen Reparaturzustands der zumindest einen Funktionseinheit (2) dynamisch angepasst wird (S4).

9. Computerprogrammprodukt, umfassend Befehle, die bei der Ausführung des Computerprogrammprodukts durch einen Computer diesen veranlassen, das Verfahren nach einem der vorhergehenden Ansprüche 1 bis 8 auszuführen.

10. Reparatursystem (3) zum Durchführen eines automatischen Reparaturprozesses an zumindest einer Funktionseinheit (2) einer Basiseinheit (1), mit
- einer Detektionseinheit (5) zum Detektieren eines fehlerhaften Zustands der zumindest einen Funktionseinheit (2),
- einer Auswerteeinheit (7) zum Bestimmen eines Typs der zumindest einen Funktionseinheit (2) oder zum Bereitstellen einer Information, die den Typ der zumindest einen Funktionseinheit (2) charakterisiert;
- einer elektronischen Recheneinheit (10) zum Zuordnen der zumindest einen Funktionseinheit (2) zu einer dem bestimmten Typ der Funktionseinheit (2) charakterisierenden Fehlerfall-Typ-Klasse (9), bei welcher es sich um eine Klassifizierungsdatenbank bezüglich der möglichen Fehlerzustände des jeweiligen Typs der Funktionseinheit (2) handelt, und zum Priorisieren zumindest zwei Fehlerzustände (11) in einer Prioritätsreihenfolge bezüglich des bestimmten Typs der Funktionseinheit (2) anhand der Fehlerfall-Typ-Klasse (9), wobei jedem Fehlerzustand (11) ein individueller Reparaturzyklus, bei welchem es sich um eine vorgegebene Reparaturmaßnahme handelt, für die Funktionseinheit (2) zugeordnet ist,
- einer Verarbeitungseinheit (13) zum Auswählen eines ersten Fehlerzustands (F1) der zumindest zwei Fehlerzustände (11) mit der höchsten Priorität,
- wobei die Verarbeitungseinheit weiter eingerichtet ist zum Durchführen des Reparaturzyklus des ausgewählten ersten Fehlerzustands (F1) an der zumindest einen Funktionseinheit (2),
- der Auswerteeinheit (7), die dazu eingerichtet ist, einen aktuellen Reparaturzustand der zumindest einen Funktionseinheit (2) nach Abschluss des durchgeführten Reparaturzyklus des ersten Fehlerzustands (F1) zu beurteilen, wobei einzelne Fehlerzustände (11) der zumindest einen Funktionseinheit (2) hinsichtlich einer Kompatibilität ihrer Reparaturzyklen zueinander klassifiziert werden, wobei jeweils kompatible Fehlerzustände zu einer Kompatibilitätsklasse zugeordnet werden wobei die Fehlerzustände (11), deren Reparaturzyklen gleichzeitig an der Funktionseinheit (2) ausgeführt werden können, ein und derselben Kompatibilitätsklasse zugeordnet werden, wobei das Reparatursystem dazu ausgebildet ist zusätzlich zu dem ausgewählten ersten Fehlerzustand (F1) weitere Fehlerzustände (Fx) ausgewählt werden, welche die gleiche Kompatibilitätsklasse wie des ersten Fehlerzustands (F1) aufweisen, wobei das Reparatursystem (3) dazu eingerichtet ist, Reparaturzyklen dieser weiteren Fehlerzustände (Fx) zumindest zeitweise gleichzeitig zum Reparaturzyklus des ersten Fehlerzustands (F1) an der zumindest einen Funktionseinheit (2) auszuführen und wobei die Reparaturzyklen der weiteren Fehlerzustände (Fx) und der Reparaturzyklus des ersten Fehlerzustands (F1) jeweils innerhalb einer vorgegebenen Zeitdauer ausgeführt werden, wobei unmittelbar nach dem Ende des durchgeführten Reparaturzyklus, welcher im Vergleich zu den anderen Reparaturzyklen dieser Kompatibilitätsklasse die längste Zeitdauer zur Ausführung benötigt, der aktuelle Reparaturzustand der zumindest einen Funktionseinheit (2) von der Auswerteeinheit (7) beurteilt wird.

11. Reparatursystem (3) nach Anspruch 10, wobei
Die elektronische Recheneinheit (10), die Auswerteeinheit (7), und die Verarbeitungseinheit (13) des Reparatursystems (3) mit einem neuronalen Netzwerk (15) verbunden sind.

12. Reparatursystem (3) nach Anspruch 10 oder 11, wobei die Basiseinheit (1) als Fahrzeug und die zumindest eine Funktionseinheit (2) als Sensor ausgebildet sind.

## Claims

1. Method for performing an automatic repair process on at least one functional unit (2) of a base unit (1), in which method the following steps are performed:
- detecting a faulty state of the at least one functional unit (2) using a detection unit (5) (S1);
- determining a type of the at least one functional unit (2) using an evaluation unit (7) or providing information that characterizes the type of the at least one functional unit (2) (S2);
- assigning the at least one functional unit (2) to a fault case type class (9) characterizing the determined type of the functional unit (2), which class is a classification database regarding the possible fault states of the relevant type of the functional unit (2), wherein a fault case type class (9) is assigned at least two different fault states (11) (S3) that are prioritized in a priority order, wherein each fault state (11) is assigned an individual repair cycle for the functional unit (2), which cycle is a predefined repair measure (S4);
- selecting a first fault state (F1) from the at least two fault states (11) with the highest priority (S8);
- performing the repair cycle assigned to the selected first fault state (F1) on the at least one functional unit (2) (S8);
- assessing a current repair state of the at least one functional unit (2) after completion of the performed repair cycle for the first fault state (F1) (S10), wherein unique fault states (11) of the at least one functional unit (2) are classified with respect to a mutual compatibility of the repair cycles therefor, wherein in each case compatible fault states are assigned to a compatibility class (S9), wherein the fault states (11) of which the repair cycles can be carried out simultaneously on the functional unit (2) are assigned to the same compatibility class;
- selecting, in addition to the selected first fault state (F1), further fault states (Fx) that have the same compatibility class as the first fault state (F1), wherein repair cycles for these further fault states (Fx) are carried out on the at least one functional unit (2) at least temporally simultaneously with the repair cycle for the first fault state (F1) (S9); and
- carrying out the repair cycles for the further fault states (Fx) and the repair cycle for the first fault state (F1) each within a predefined time period, wherein immediately after the end of the performed repair cycle that requires the longest time period to carry out compared to the other repair cycles of this compatibility class, the current repair state of the at least one functional unit (2) is assessed (S9).

2. Method according to claim 1, wherein
a predefined reference state of the at least one functional unit (2) in which the at least one functional unit (2) is not in a faulty state is taken into account when assessing the current repair state of the at least one functional unit (2) (S10).

3. Method according to claim 1 or 2, wherein
the current repair state of the at least one functional unit (2) is assessed as to whether the at least one functional unit (2) continues to be in the faulty state (S10).

4. Method according to claim 3, wherein
if the at least one functional unit (2) continues to be in the faulty state, a repair cycle for a second fault state (F2) of the fault case type class (9) is additionally performed that has a lower priority compared to the first fault state (F1), wherein after completion of the performed repair cycle for the second fault state (F2), the current repair state of the at least one functional unit (2) is assessed (S10).

5. Method according to any of the preceding claims, wherein
if the type of the functional unit (2) cannot be assigned to any fault case type class (9), a default fault case type class (12) is assigned to the type of the functional unit (2) in this case, wherein a predefined number of different repair cycles are performed on the at least one functional unit (2) on the basis of the default fault case type class (12) (S5).

6. Method according to any of the preceding claims, wherein
each individual repair cycle is assigned a predefined number of different software-based repair measures and/or hardware-based repair measures for repairing the at least one functional unit (2) (S4).

7. Method according to any of the preceding claims, wherein
each of the at least two fault states (11) is assigned an individual prioritization number, wherein the priority of each fault state (11) is defined on the basis of the relevant prioritization number (S4).

8. Method according to claim 7, wherein
the prioritization number of each fault state is generated using an electronic computing unit (10) on the basis of detection probability information and/or fault consequence information and/or occurrence probability information, in particular the detection probability information and/or the fault consequence information and/or the occurrence probability information is dynamically adapted on the basis of the assessment of the current repair state of the at least one functional unit (2) (S4).

9. Computer program product comprising commands which, when the computer program product is executed by a computer, cause the computer to carry out the method according to any of the preceding claims 1 to 8.

10. Repair system (3) for performing an automatic repair process on at least one functional unit (2) of a base unit (1), having
- a detection unit (5) for detecting a faulty state of the at least one functional unit (2),
- an evaluation unit (7) for determining a type of the at least one functional unit (2) or for providing information that characterizes the type of the at least one functional unit (2);
- an electronic computing unit (10) for assigning the at least one functional unit (2) to a fault case type class (9) characterizing the determined type of the functional unit (2), which class is a classification database regarding the possible fault states of the relevant type of the functional unit (2), and for prioritizing at least two fault states (11) in a priority order regarding the determined type of the functional unit (2) based on the fault case type class (9), wherein each fault state (11) is assigned an individual repair cycle for the functional unit (2), which cycle is a predefined repair measure,
- a processing unit (13) for selecting a first fault state (F1) from the at least two fault states (11) with the highest priority,
- wherein the processing unit is further configured for performing the repair cycle for the selected first fault state (F1) on the at least one functional unit (2),
- the evaluation unit (7), which is configured for assessing a current repair state of the at least one functional unit (2) after completion of the performed repair cycle for the first fault state (F1), wherein unique fault states (11) of the at least one functional unit (2) are classified with respect to a mutual compatibility of the repair cycles therefor, wherein in each case compatible fault states are assigned to a compatibility class, wherein the fault states (11) of which the repair cycles can be carried out simultaneously on the functional unit (2) are assigned to the same compatibility class, wherein the repair system is designed for are selected, in addition to the selected first fault state (F1), further fault states (Fx) that have the same compatibility class as the first fault state (F1), wherein the repair system (3) is configured for carrying out repair cycles for these further fault states (Fx) on the at least one functional unit (2) at least temporally simultaneously with the repair cycle for the first fault state (F1), and wherein the repair cycles for the further fault states (Fx) and the repair cycle for the first fault state (F1) are each carried out within a predefined time period, wherein immediately after the end of the performed repair cycle that requires the longest time period to carry out compared to the other repair cycles of this compatibility class, the current repair state of the at least one functional unit (2) is assessed by the evaluation unit (7).

11. Repair system (3) according to claim 10, wherein
the electronic computing unit (10), the evaluation unit (7), and the processing unit (13) of the repair system (3) are connected to a neural network (15).

12. Repair system (3) according to claim 10 or 11, wherein
the base unit (1) is in the form of a vehicle and the at least one functional unit (2) is in the form of a sensor.

## Revendications

1. Procédé permettant de réaliser un processus de réparation automatique sur au moins une unité fonctionnelle (2) d'une unité de base (1), dans lequel les étapes suivantes sont réalisées :
- détection d'un état de défaillance de l'au moins une unité fonctionnelle (2) à l'aide d'une unité de détection (5) (S1) ;
- détermination d'un type de l'au moins une unité fonctionnelle (2) à l'aide d'une unité d'évaluation (7) ou fourniture d'informations qui caractérisent le type de l'au moins une unité fonctionnelle (2) (S2) ;
- association de l'au moins une unité fonctionnelle (2) à une classe de type de défaillance (9) caractérisant le type déterminé de l'unité fonctionnelle (2), laquelle classe de type de défaillance est une base de données de classification relative aux états de défaillance possibles du type respectif de l'unité fonctionnelle (2), dans lequel au moins deux états de défaillance (11) différents sont associés à une classe de type de défaillance (9) (S3), lesquels états de défaillance sont classés en termes de priorité suivant un ordre de priorité, dans lequel un cycle de réparation individuel, qui est une mesure de réparation prédéfinie, est associé à chaque état de défaillance (11) pour l'unité fonctionnelle (2) (S4) ;
- sélection d'un premier état de défaillance (F1) parmi les au moins deux états de défaillance (11) ayant la priorité la plus élevée (S8) ;
- réalisation du cycle de réparation associé au premier état de défaillance (F1) sélectionné sur l'au moins une unité fonctionnelle (2) (S8) ;
- évaluation d'un état de réparation actuel de l'au moins une unité fonctionnelle (2) après l'achèvement du cycle de réparation réalisé du premier état de défaillance (F1) (S10), dans lequel des états de défaillance (11) individuels de l'au moins une unité fonctionnelle (2) sont classés en ce qui concerne une compatibilité de leurs cycles de réparation les uns par rapport aux autres, dans lequel des états de défaillance respectivement compatibles sont associés à une classe de compatibilité (S9), dans lequel les états de défaillance (11) dont les cycles de réparation peuvent être exécutés en même temps sur l'unité fonctionnelle (2) sont associés à une seule et même classe de compatibilité ;
- sélection, en plus du premier état de défaillance (F1) sélectionné, d'états de défaillance (Fx) supplémentaires qui présentent la même classe de compatibilité que le premier état de défaillance (F1), dans lequel des cycles de réparation de ces états de défaillance (Fx) supplémentaires sont exécutés au moins temporairement en même temps que le cycle de réparation du premier état de défaillance (F1) sur l'au moins une unité fonctionnelle (2) (S9) ; et
- exécution des cycles de réparation des états de défaillance (Fx) supplémentaires et du cycle de réparation du premier état de défaillance (F1) respectivement dans une période de temps prédéfinie, dans lequel l'état de réparation actuel de l'au moins une unité fonctionnelle (2) est évalué immédiatement après la fin du cycle de réparation réalisé, lequel nécessite la période de temps la plus longue pour l'exécution en comparaison avec les autres cycles de réparation de cette classe de compatibilité (S9).

2. Procédé selon la revendication 1, dans lequel
un état de référence prédéfini de l'au moins une unité fonctionnelle (2), état de référence dans lequel l'au moins une unité fonctionnelle (2) ne présente pas d'état défectueux, est pris en compte lors de l'évaluation de l'état de réparation actuel de l'au moins une unité fonctionnelle (2) (S10).

3. Procédé selon la revendication 1 ou 2, dans lequel
l'état de réparation actuel de l'au moins une unité fonctionnelle (2) est évalué pour savoir si l'au moins une unité fonctionnelle (2) continue à présenter l'état de défaillance (S10).

4. Procédé selon la revendication 3, dans lequel
si l'au moins une unité fonctionnelle (2) continue à présenter l'état défectueux, un cycle de réparation d'un second état de défaillance (F2) de la classe de type de défaillance (9) est en outre réalisé, lequel cycle de réparation présente une priorité inférieure par rapport au premier état de défaillance (F1), dans lequel l'état de réparation actuel de l'au moins une unité fonctionnelle (2) est évalué après l'achèvement du cycle de réparation réalisé du second état de défaillance (F2) (S10).

5. Procédé selon l'une des revendications précédentes, dans lequel
si le type de l'unité fonctionnelle (2) ne peut être associé à aucune classe de type de défaillance (9), dans ce cas, une classe de type de défaillance par défaut (12) est associée au type de l'unité fonctionnelle (2), dans lequel un nombre prédéfini de cycles de réparation différents est réalisé sur l'au moins une unité fonctionnelle (2) en fonction de la classe de type de défaillance par défaut (12) (S5).

6. Procédé selon l'une des revendications précédentes, dans lequel
un nombre prédéfini de mesures de réparation logicielle et/ou de mesures de réparation matérielle différentes pour la réparation de l'au moins une unité fonctionnelle (2) est associé à chaque cycle de réparation individuel (S4).

7. Procédé selon l'une des revendications précédentes, dans lequel
un numéro de priorité individuel est associé à chacun des au moins deux états de défaillance (11), dans lequel la priorité de chaque état de défaillance (11) est définie en fonction du numéro de priorité respectif (S4).

8. Procédé selon la revendication 7, dans lequel
le numéro de priorité de chaque état de défaillance est généré en fonction d'informations de probabilité de découverte et/ou d'informations de séquence de défaillance et/ou d'informations de probabilité d'occurrence à l'aide d'une unité de calcul électronique (10), en particulier, les informations de probabilité de découverte et/ou les informations de séquence de défaillance et/ou les informations de probabilité d'occurrence sont adaptées de manière dynamique en fonction de l'évaluation de l'état de réparation actuel de l'au moins une unité fonctionnelle (2) (S4).

9. Produit-programme d'ordinateur, comprenant des instructions qui, lors de l'exécution du produit-programme d'ordinateur par un ordinateur, amènent celui-ci à exécuter le procédé selon l'une des revendications 1 à 8 précédentes.

10. Système de réparation (3) permettant de réaliser un processus de réparation automatique sur au moins une unité fonctionnelle (2) d'une unité de base (1), comportant
- une unité de détection (5) permettant de détecter un état défectueux de l'au moins une unité fonctionnelle (2),
- une unité d'évaluation (7) permettant de déterminer un type de l'au moins une unité fonctionnelle (2) ou de fournir des informations qui caractérisent le type de l'au moins une unité fonctionnelle (2) ;
- une unité de calcul électronique (10) permettant d'associer l'au moins une unité fonctionnelle (2) à une classe de type de défaillance (9) caractérisant le type déterminé de l'unité fonctionnelle (2), laquelle classe de type de défaillance est une base de données de classification relative aux états de défaillance possibles du type respectif de l'unité fonctionnelle (2), et permettant de classer en termes de priorité au moins deux états de défaillance (11) suivant un ordre de priorité par rapport au type déterminé de l'unité fonctionnelle (2) à partir de la classe de type de défaillance (9), dans lequel un cycle de réparation individuel, qui est une mesure de réparation prédéfinie, est associé à chaque état de défaillance (11) pour l'unité fonctionnelle (2),
- une unité de traitement (13) permettant de sélectionner un premier état de défaillance (F1) parmi les au moins deux états de défaillance (11) ayant la priorité la plus élevée,
- dans lequel l'unité de traitement est en outre configurée pour réaliser le cycle de réparation du premier état de défaillance (F1) sélectionné sur l'au moins une unité fonctionnelle (2),
- l'unité d'évaluation (7), qui est configurée pour évaluer un état de réparation actuel de l'au moins une unité fonctionnelle (2) après l'achèvement du cycle de réparation réalisé du premier état de défaillance (F1), dans lequel des états de défaillance (11) individuels de l'au moins une unité fonctionnelle (2) sont classés en ce qui concerne une compatibilité de leurs cycles de réparation les uns par rapport aux autres, dans lequel des états de défaillance respectivement compatibles sont associés à une classe de compatibilité, dans lequel les états de défaillance (11) dont les cycles de réparation peuvent être exécutés en même temps sur l'unité fonctionnelle (2) sont associés à une seule et même classe de compatibilité, dans lequel le système de réparation est configuré pour sélectionner, en plus du premier état de défaillance (F1) sélectionné, des états de défaillance (Fx) qui présentent la même classe de compatibilité que le premier état de défaillance (F1), dans lequel le système de réparation (3) est configuré pour exécuter des cycles de réparation de ces états de défaillance (Fx) supplémentaires au moins temporairement en même temps que le cycle de réparation du premier état de défaillance (F1) sur l'au moins une unité fonctionnelle (2), et dans lequel les cycles de réparation des états de défaillance (Fx) supplémentaires et le cycle de réparation du premier état de défaillance (F1) sont respectivement exécutés dans une période de temps prédéfinie, dans lequel l'état de réparation actuel de l'au moins une unité fonctionnelle (2) est évalué par l'unité d'évaluation (7) immédiatement après la fin du cycle de réparation réalisé, lequel cycle de réparation nécessite la plus longue période de temps pour l'exécution en comparaison avec les autres cycles de réparation de cette classe de compatibilité.

11. Système de réparation (3) selon la revendication 10, dans lequel
l'unité de calcul électronique (10), l'unité d'évaluation (7), et l'unité de traitement (13) du système de réparation (3) sont connectées à un réseau neuronal (15).

12. Système de réparation (3) selon la revendication 10 ou 11, dans lequel
l'unité de base (1) est conçue comme un véhicule et l'au moins une unité fonctionnelle (2) est conçue comme un capteur.
